(19) **Europäisches Patentamt**

**European Patent Office**

**Office européen des brevets**

(11) **EP 1 341 083 B1**

(12) **EUROPEAN PATENT SPECIFICATION**

(45) Date of publication and mention
of the grant of the patent:
**16.08.2006 Bulletin 2006/33**

(51) Int Cl.:
*G06F 9/46* *(2006.01)*      *G06F 9/45* *(2006.01)*

(21) Application number: **03250990.3**

(22) Date of filing: **18.02.2003**

(54) **Parallel-process execution method and multiprocessor-type computer**

Paralleles Prozess-Ausführungsverfahren und Mehrprozessorenrechner

Méthode d'exécution d'un processus parallèle et ordinateur du type multiprocesseur

(84) Designated Contracting States:
**DE FR GB**

(30) Priority: **28.02.2002 JP 2002053383**

(43) Date of publication of application:
**03.09.2003 Bulletin 2003/36**

(73) Proprietor: **FUJITSU LIMITED**
**Kawasaki-shi,**
**Kanagawa 211-8588 (JP)**

(72) Inventor: **Mikamo, Toshiaki,**
**c/o Fujitsu Limited**
**Kawasaki-shi,**
**Kanagawa 211-8588 (JP)**

(74) Representative: **Stebbing, Timothy Charles et al**
**Haseltine Lake & Co.,**
**Imperial House,**
**15-19 Kingsway**
**London WC2B 6UD (GB)**

(56) References cited:
- **FRANKE H ET AL: "Gang scheduling for highly efficient, distributed multiprocessor systems" FRONTIERS OF MASSIVELY PARALLEL COMPUTING, 1996. PROCEEDINGS FRONTIERS '96., SIXTH SYMPOSIUM ON THE ANNAPOLIS, MA, USA 27-31 OCT. 1996, LOS ALAMITOS, CA, USA,IEEE COMPUT. SOC, US, 27 October 1996 (1996-10-27), pages 4-12, XP010201571 ISBN: 0-8186-7551-9**
- **FEITELSON D G: "Job scheduling in multiprogrammed parallel systems" IBM RESEARCH REPORT, SAN JOSE, CA, US, August 1997 (1997-08), pages 1-4,1-171, XP002942107**
- **ZHOU B B ET AL: "An efficient resource allocation scheme for gang scheduling" CLUSTER COMPUTING, 1999. PROCEEDINGS. 1ST IEEE COMPUTER SOCIETY INTERNATIONAL WORKSHOP ON MELBOURNE, VIC., AUSTRALIA 2-3 DEC. 1999, LOS ALAMITOS, CA, USA,IEEE COMPUT. SOC, US, 2 December 1999 (1999-12-02), pages 187-194, XP010365669 ISBN: 0-7695-0343-8**

**Description**

The present invention relates to a parallel-process execution method, a multiprocessor-type computer, a parallel-process execution program, and a recording medium in which the parallel-process execution program is recorded. In particular, the parallel-process execution method executes a parallel process and another process in a time-sharing manner, the multiprocessor-type computer executes such a parallel-process execution method, the parallel-process execution program makes a computer execute such a parallel-process execution method, and the recording medium stores such a parallel-process execution program.

Computers each having a plurality of processors (i.e., multiprocessor-type computers) can execute a single program in parallel by using the plurality of processors. Hereinafter, a program which can be executed in parallel is referred to as a parallel program. When a parallel program is executed, a plurality of parallel processes are generated from the parallel program, where the respective parallel processes can be executed in parallel. The plurality of parallel processes are executed in parallel by separate processors. The respective processors exchange data with each other, and execute a sequence of processing defined in the parallel program. The process is a unit of processing containing at least one thread, and the processor is a processing device such as a CPU (central processing unit) or MPU (micro processing unit). In the following explanations, for convenience, the processors are assumed to be CPUs.

There is a check point in execution of each parallel process, and data exchange (synchronized communication) with another parallel process is to be performed at the check point. When CPUs execute two parallel processes between which data exchange is necessary, and executions of the parallel processes reach their check points, the CPUs perform processing for data exchange. When the execution of the first parallel process reaches its check point earlier than the execution of the second parallel process, the CPU executing the first parallel process waits for synchronization until the execution by the second CPU reaches its check point.

In data processing performed by CPUs, wait times for I/O (input/output) waits and the like occur as well as the synchronization wait times. If the CPUs in wait states are arranged to execute processes other than the originally assigned parallel processes, the processing efficiency of the entire system increases. Therefore, currently, the CPUs are arranged to operate in a time-sharing manner so that the CPUs in wait states execute processes other than the originally assigned parallel processes, where the processes other than the originally assigned parallel processes may be either parallel processes or non-parallel processes.

Further, while a first parallel process waits for synchronization for data exchange with a second parallel process, a CPU may execute a third process. In this case, execution of the third process may not be completed when execution of the second parallel process which is required to exchange data with the first parallel process reaches a check point. Therefore, a further synchronization wait time occurs in the CPU which executes the second parallel process. The occurrence of such a synchronization wait time decreases the processing efficiency of the computer system. In addition, in the system in which charges are made based on the CPU usage rates, charges are made for the synchronization waits. This is disadvantageous to users of the computer system.

According to the process scheduling method disclosed in Japanese Unexamined Patent Publication No. 10-74150, a plurality of CPUs in a computer system operate in a time-sharing manner so that parallel processes and other processes are executed in predetermined periods (phases) which simultaneously begin and end in the plurality of CPUs. That is, executions of a plurality of parallel processes generated from a parallel program simultaneously begin and end in the plurality of CPUs. Thus, synchronization wait times which occur during executions of parallel processes in the system disclosed in JPP No. 10-74150 become the same as synchronization wait times which occur in the case where the time-sharing processing is not performed. Therefore, it is possible to minimize the synchronization wait times which occur between parallel processes constituting a parallel program, and prevent the decrease in the system efficiency.

However, when some processes are executed by computers, a turnaround time (i.e., a time from a start to an end of execution of a process) is required to be guaranteed. For example, in processing for analyzing meteorological data, it is necessary to guarantee the turnaround time. Although the amounts of meteorological data are great, processing for analyzing meteorological data is required to be completed a predetermined time before an announcement of a weather forecast. Nevertheless, in the aforementioned process scheduling method disclosed in the Japanese Unexamined Patent Publication No. 10-74150, the lengths of the respective phases are fixed. Therefore, the turnaround time cannot be guaranteed for each parallel program. For example, in order to guarantee turnaround times in execution of some parallel programs, 50% of the processing capability of a multiprocessor-type computer is required to be used. According to the process scheduling method disclosed in JPP No. 10-74150, only a time corresponding to one phase (e.g., 10%) can be allocated for execution of such a parallel program, and therefore it is impossible to guarantee turnaround times.

The function for guaranteeing a job execution time included in Parallelnavi (registered trademark), which is being sold as scheduling software by Fujitsu Limited, realizes a conventional method for guaranteeing turnaround times. This method is disclosed in European Patent Publication No. EP1365328, and guarantees a turnaround time by enabling designation of the value of the phase for each parallel process. Hereinafter, a scheduling method by which a turnaround time is guaranteed is referred to as a turnaround preference policy. Specifically, in the above turnaround preference policy, a period is defined on a time axis, and is equally divided into 10 to 20 unit times (which are referred to as timeslots), and the timeslots are allocated to parallel processes. (The percentage of timeslots allocated to each parallel process is referred to as a CPU allocation ratio.) In addition, the priorities of the processes to be executed in the respectively allocated timeslots are maximized. Then, the parallel processes are executed in the allocated timeslots in harmony with each other with high reliability. Further, no process other than the above processes to which the timeslots are allocated is executed, in timeslots which are not allocated to the above processes, or by a CPU which is in an idle state due to an I/O wait and the like. Therefore, turnaround times are guaranteed. Hereinafter, timeslots which are not allocated to processes are referred to as idle CPU resources.

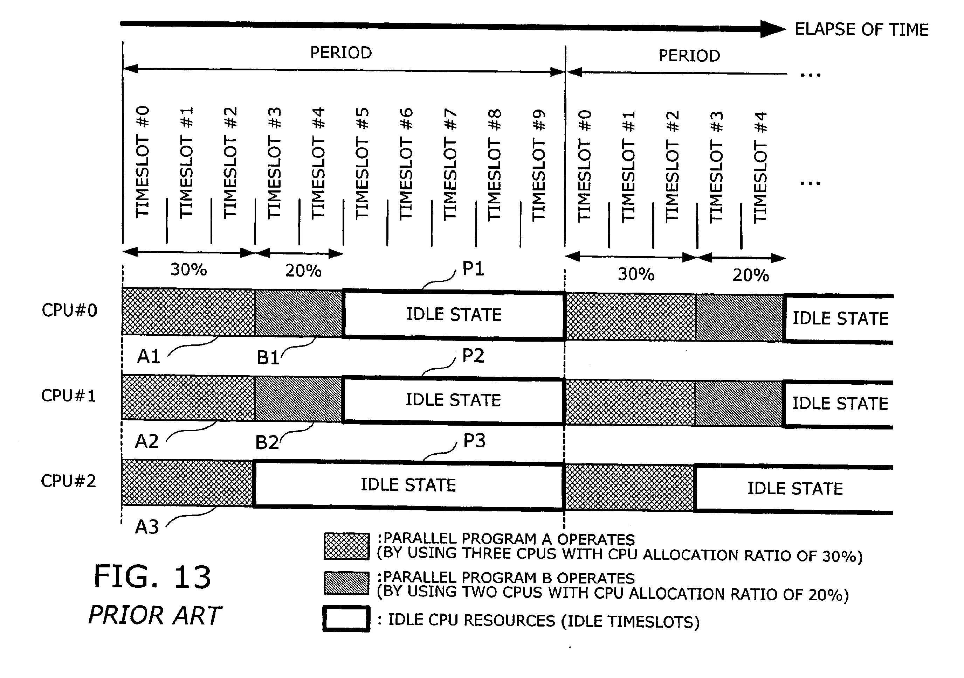

However, according to the conventional turnaround preference policy, no parallel process is executed by using idle CPU resources. Therefore, when the total amount of the idle CPU resources is large, the throughput of the entire system becomes small. This problem associated with the turnaround preference policy is explained in detail below with reference to Fig. 13.

Fig. 13 is a diagram indicating execution operations in accordance with the conventional turnaround preference policy. In the example of Fig. 13, there are three CPU resources CPU#0 to CPU#2, and every predetermined period is divided into timeslots #0 to #9.

It is assumed that the parallel processes A1 to A3 are respectively executed by the CPU#0 to CPU#2, in the timeslots #0 to #2. Subsequently, the parallel processes B1 and B2 are respectively executed by the CPU#0 and CPU#1, in the timeslots #3 and #4. The CPU#0 and CPU#1 are respectively in the idle states P1 and P2, in the timeslots #5 to #9, and the CPU#2 is in the idle state P3 in the timeslots #3 to #9.

In the above situation, the parallel processes A1 to A3 and the parallel processes B1 and B2 are executed in only the allocated timeslots, and are not executed in the other timeslots. Therefore, the idle times of the CPUs become long, and the utilization ratio of the system is small. That is, although the guarantee of the turnaround times is beneficial to users, the small throughput of the entire system is disadvantageous to the service provider of the computer system.

FRANKE H ET AL: 'Gang scheduling for highly efficient, distributed multiprocessor systems' FRONTIERS OF MASSIVELY PARALLEL COMPUTING, 1996. PROCEEDINGS FRONTIERS '96., SIXTH SYMPOSIUM ON THE ANNAPOLIS, MA, USA 27-31 OCT. 1996, LOS ALAMITOS, CA, USA, IEEE COMPUT. SOC, US, 27 October 1996 (1996-10-27), pages 4-12, XP010201571 ISBN: 0-8186-7551-9 discloses a parallel-process execution method in which a set of threads or processes to be executed at the same time is called a "gang" (job). Each parallel job is executed within a "class" which is allocated a fraction of the execution time. The execution time allocated to each job is arranged to ensure gang scheduling. When the system is saturated and every processor has a gang member for each class, each gang member (process) simply executes for the assigned fraction of the execution time. If there are empty classes (idle slots), the time is reallocated, making use of a Local Scheduling Table which records classes, execution time fractions, a "pids" field specifying local processes or gang members, and an empty cycles field indicating how the time of an empty class is to be reallocated. One way of reallocation is to give preference to bigger jobs, i.e. jobs in a higher class.

FEITELSON D G: 'Job scheduling in multiprogrammed parallel systems' IBM RESEARCH REPORT, SAN JOSE, CA, US, August 1997 (1997-08), pages 1-4, 1-71, XP002942107 discloses a gang scheduling technique with dynamic repartitioning, wherein a partition of processing elements (PEs) is changed when the load changes. Scheduling space is viewed as a matrix in which columns represent PEs and rows represent scheduling slots. In one scheduling algorithm, scheduling proceeds by simultaneous switching of all the PEs from the thread in one row to the thread in the next row. PEs having no thread assigned in the next row may execute any other thread that happens to be mapped to them. In another scheduling algorithm, jobs are classified according to degree of parallelism and a certain fraction of the time is allocated to each class.

Even with the above proposals, however, there is still a need for a scheduling technique which minimises the idle times of the CPUs so as to increase throughput in an environment in which a turnaround time of a parallel program is guaranteed.

In a first aspect of the present invention, there is provided a parallel process execution method for executing, in cycles of a predetermined period and by a plurality of processors in parallel, processes generated from at least one parallel program is provided The parallel process execution method comprises the steps of: (a) dividing each predetermined period into a predetermined number of timeslots; (b) assigning parallel processes generated from each parallel program to the time slots so that the parallel processes can operate in parallel for a time period corresponding to a processor allocation ratio preset for each parallel program; (c) creating an idle timeslot map formed from a bit series $E_k$ indicating idle states of a kth timeslot of each processor to which none of said parallel processes is assigned in step (b); (d) making a determination whether or not parallel processes generated from a said parallel program can fit into idle timeslots by testing whether $P_i$ & $E_k = P_i$ holds true, wherein $P_i$ is a bit series indicating which processor is allocated to parallel processes generated from parallel program i, and wherein "&" is a bitwise logical AND operator; (e) additionally assigning the parallel processes to the idle timeslots when $P_i$ & $E_k = P_i$ holds true; and (f) executing by the plurality of processors the parallel processes assigned to the timeslots including the idle timeslots.

In a second aspect of the present invention, a multiprocessor type computer is provided. The multiprocessor type computer comprises:

a plurality of processors for executing in parallel, parallel processes generated from at least one parallel program in cycles of a predetermined period;

means for dividing each predetermined period into a plurality of timeslots;

processor-assignment means which assigns parallel processes generated from each parallel program to the time slots so that the parallel processes can operate in parallel for a time period corresponding to a processor allocation ratio preset for each parallel program;

mapping means for creating an idle timeslot map from a bit series Ek indicating idle states of a k-th timeslot of each processor to which none of said parallel processes has been assigned by said processor-assignment means;

processor-additional-assignment means which makes a determination whether or not parallel processes generated from a said parallel program can fit into idle time slots by testing whether Pi & Ek = Pi holds true, where Pi is a bit series indicating which processor is allocated to parallel processes generated from parallel program i, and where "&" is a bitwise logical-AND operator; and additionally assigns the parallel processes to the idle time slots when Pi & Ek = Pi holds true; and

process-execution means which executes by the plurality of processors the parallel processes assigned to the timeslots including the idle time slots.

According to a further aspect of the invention, there is provided a parallel-process execution program as set forth in claim 7. This program may be recorded on a recording medium.

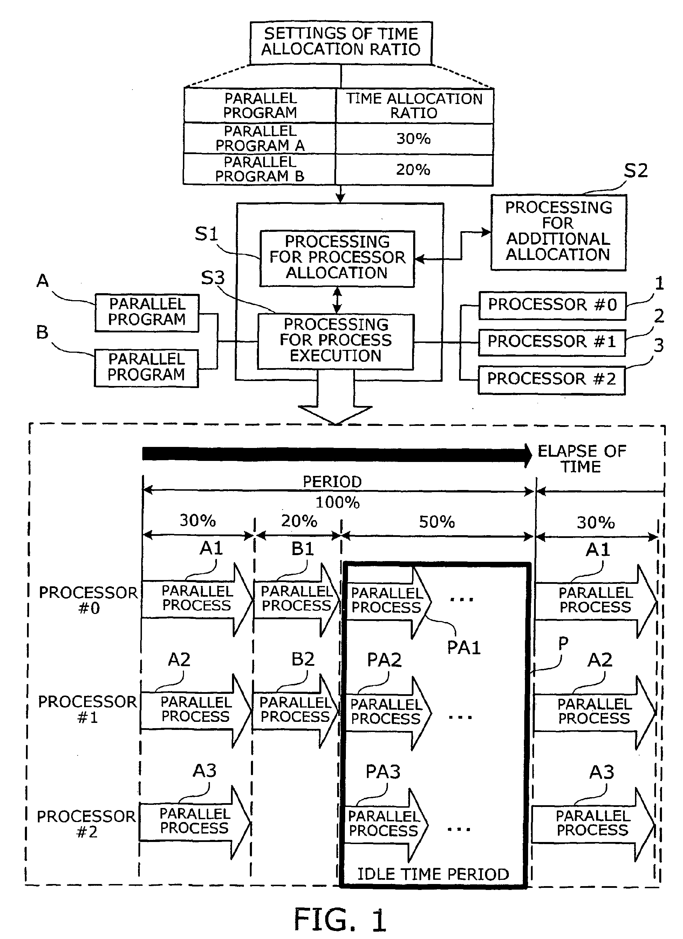

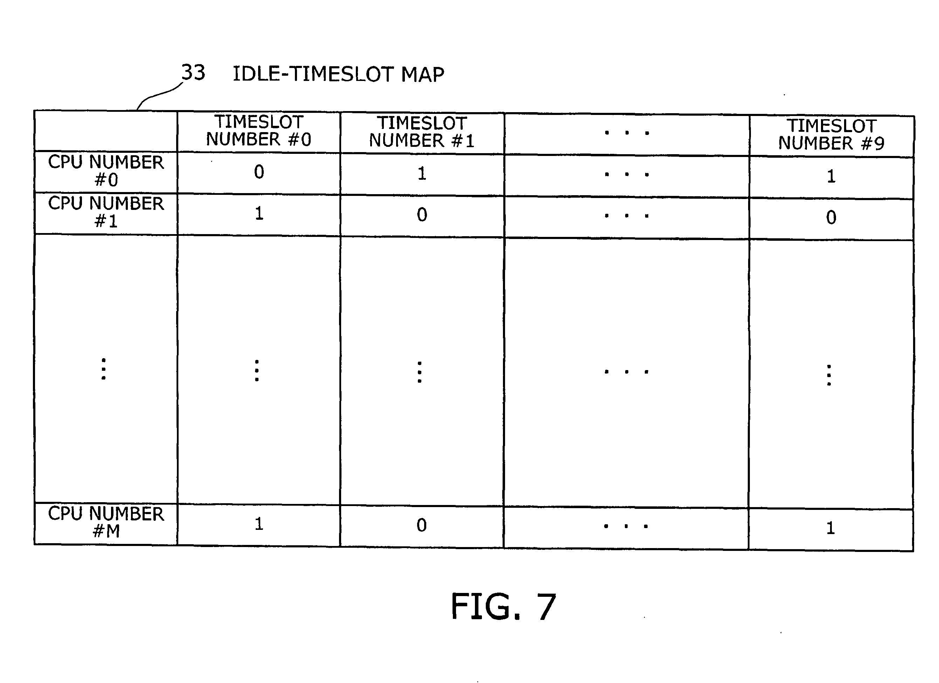

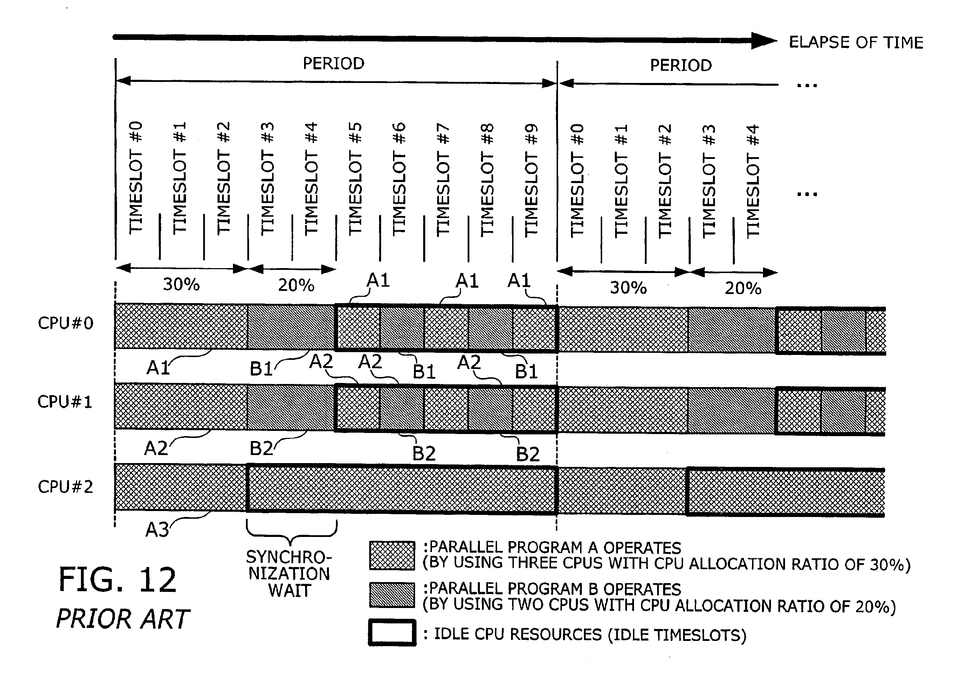

The above and other features and advantages of the present invention will become apparent from the following description when taken in conjunction with the accompanying drawings, in which Figures 7 to 11 illustrate a preferred embodiment of the present invention by way of example, Figures 1 to 6 illustrate the basic principle of the invention, and Figures 12 and 13 illustrate the prior art.

In the drawings:

Fig. 1 is a diagram illustrating the basic principle of the present invention;

Fig. 2 is a diagram illustrating an exemplary hardware construction of a multiprocessor-type computer to which the present invention can be applied;

Fig. 3 is a block diagram illustrating functions of an operating system (OS) used in an embodiment of the invention;

Fig. 4 is a diagram illustrating details of constructions of a resource management system and an additional allocation system;

Fig. 5 is a diagram illustrating an example of a timeslot-assignment map;

Fig. 6 is a diagram illustrating an example of an assignment bit map;

Fig. 7 is a diagram illustrating an example of an idle timeslot map;

Fig. 8 is a diagram illustrating an example of priority assignment for preferential selection

Fig. 9 is a diagram indicating a determination procedure in an permissibility-of-additional-allocation determination unit, according to features of the invention;

Fig. 10 is a diagram indicating an execution state after additional allocation of CPU resources in an embodiment of the invention;

Fig. 11 is a flow diagram indicating processing for execution of parallel processes in the embodiment;

Fig. 12 is a diagram indicating an execution state in accordance with a conventional throughput preference policy; and

Fig. 13 is a diagram indicating an execution state in accordance with the conventional turnaround preference policy.

Before describing an embodiment of the present invention, the basic principle is explained below with reference to drawings.

Fig. 1 is a diagram illustrating the basic principle of the present invention. In the parallel-process execution method according to the present invention, at least one parallel program is executed by a multiprocessor-type computer having a plurality of processors in a time-sharing manner. (The plurality of processors are identified with identifiers #0 to #2.) In the example of Fig. 1, the parallel programs A and B are executed in a time-sharing manner.

As illustrated in Fig. 1, in step S1, parallel processes A1, A2, A3, B1, or B2 generated from parallel programs A and B are assigned to processing time periods so that the parallel processes A1 to A3, or B1 and B2 can operate in parallel for time periods corresponding to processor allocation ratios preset for the parallel programs A and B, where the processing time periods are respectively defined for the plurality of processors 1 to 3 within every predetermined period (cycle). Each processor allocation ratio (time allocation ratio) is preset for a parallel program and a processor, and is a percentage of a time in which a parallel process generated from the parallel program occupies the processor in each predetermined period. In the example of Fig. 1, the processor allocation ratio (time allocation ratio) for the parallel program A is set to 30%, and the processor allocation ratio (time allocation ratio) for the parallel program B is set to 20%.

Next, after the assignment of the processes, it is determined whether or not a plurality of parallel processes PA1 to PA3 generated from the parallel program A can be assigned to the idle time periods P of the plurality of processors 1 to 3 so that the parallel processes PA1 to PA3 can operate in parallel, where the idle time periods P are included in the processing time periods of the processors 1 to 3, and no process has been assigned yet to the idle time periods P. That is, it is determined whether or not there are concurrent time periods of the different processors to which the plurality of parallel processes PA1 to PA3 can be assigned. The operation in parallel means that the plurality of parallel processes PA1 to PA3 are executed in parallel so that synchronized communication (data exchange) are enabled. When it is determined that the plurality of parallel processes PA1 to PA3 can operate in parallel, the plurality of parallel processes PA1 to PA3 are additionally assigned to the idle time periods P in step S2.

Thereafter, in step S3, the plurality of processors 1 to 3 execute the plurality of parallel processes which are assigned to the respective processing time periods. At this time, the executions of the plurality of parallel processes PA1 to PA3 simultaneously begin. When the processing time periods to which the plurality of parallel processes PA1 to PA3 are assigned elapse, executions of the plurality of parallel processes PA1 to PA3 are simultaneously ended. In addition, during the execution of the plurality of parallel processes generated from each parallel program, data are exchanged between the plurality of processors which execute the plurality of parallel processes, when necessary.

As explained above, a multiprocessor-type computer performing time sharing processing is used, and the time periods corresponding to the processor allocation ratios (which are preset for parallel programs) are respectively allocated for the parallel programs so that the parallel programs operate in parallel in the multiprocessor type computer. In addition, a plurality of parallel processes are assigned to idle time periods in the processing time periods of the plurality of processors to which no process has been assigned yet. Therefore, the throughput of the entire system can be increased. Further, since more than one parallel process generated from each parallel program simultaneously begins and ends, it is possible to prevent increase in the synchronization wait times for data exchange which is conventionally caused by the time sharing processing.

Hereinbelow, details of a multiprocessor-type computer, to which the present invention can be applied, are explained, where the processors are assumed to be CPUs.

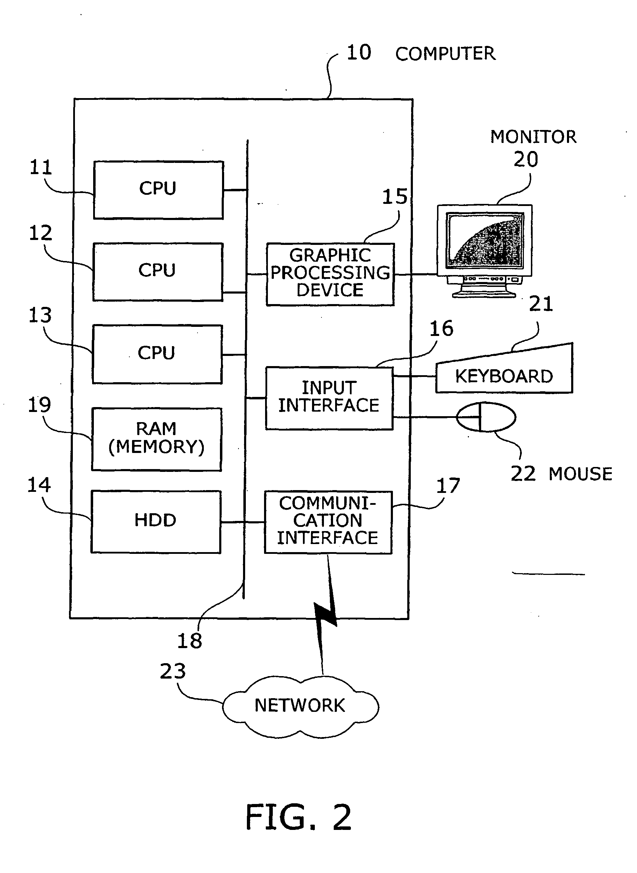

Fig. 2 is a diagram illustrating an exemplary hardware construction of a multiprocessor-type computer to which the present invention can be applied. In the computer 10 in Fig. 2, a plurality of CPUs 11 to 13 control the entire system. The CPUs 11 to 13 are connected with each other through a bus 18, and execute processes which are generated based on a shared program or the like stored in a RAM 19.

Further, each of the CPUs 11 to 13 is connected through the bus 18 to the RAM 19, a hard disk drive (HDD) 14, a graphic processing device 15, an input interface 16, and a communication interface 17.

The RAM 19 temporarily stores at least a portion of an OS (operating system) program and at least a portion of parallel programs which are executed by the CPUs 11 to 13. The OS is basic software which realizes the functions of the present invention. In addition, the RAM 19 also stores data such as a timeslot-assignment map and the like.

The HDD 14 stores the OS program, parallel programs, nonparallel programs, and the like, as well as data which are necessary for execution of various programs.

A monitor 20 is connected to the graphic processing device 15, which makes the monitor 20 display an image on an screen in accordance with an instruction from the CPUs 11 to 13. A keyboard 21 and a mouse 22 are connected to the input interface 16, which transmits signals transmitted from the keyboard 21 and the mouse 22, to the CPUs 11 to 13 through the bus 18.

The communication interface 17 is connected to a network 23, which is, for example, a wide-area network such as the Internet. The communication interface 17 is provided for exchanging data with other computers through the network 23.

By using the above hardware construction, it is possible to realize the processing functions in the embodiment of the present invention. For example, when the computer of Fig. 2 is powered on, a portion of the OS program stored in the HDD 14 is read into the RAM 19. Then, the CPUs 11 to 13 execute the OS program. Thus, the operations of the OS are started by the CPUs 11 to 13.

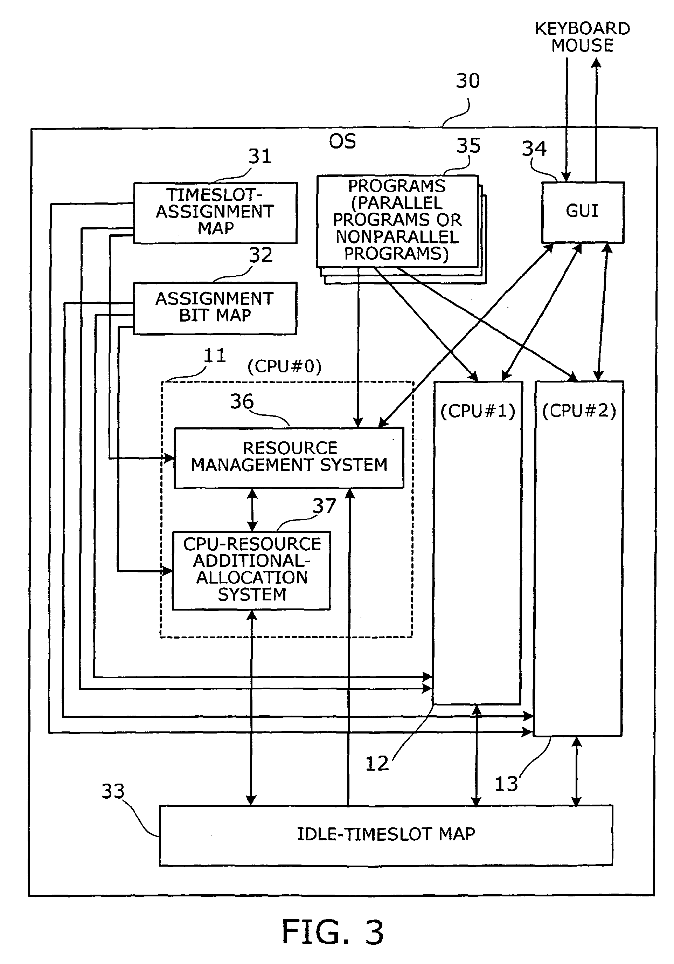

Fig. 3 is a block diagram illustrating the functions of the operating system (OS) for realizing the embodiment. In the present embodiment, the OS 30 is booted in the computer 10.

The OS 30 includes a timeslot-assignment map 31, an assignment bit map 32, an idle-timeslot map 33, a graphical user interface (GUI) 34, programs 35, a resource management system 36, and a CPU-resource additional-allocation system 37. The resource management system 36 and the CPU-resource additional-allocation system 37 are arranged in one of the CPUs 11 to 13. The OS 30 recognizes the CPUs 11 to 13 by the identifiers CPU#0, CPU#1, and CPU#2, respectively.

The timeslot-assignment map 31 is data defining a schedule of operations for harmonizing process execution timings. In addition, arbitrary data can be registered as the timeslot-assignment map 31 when the data is inputted by user's manipulation. In the timeslot-assignment map 31, an assignment of a process to be executed by each CPU in each timeslot is registered. Therefore, based on the timeslot-assignment map 31, it is possible to recognize which process is assigned to the current timeslot of each CPU. Details of the timeslot-assignment map 31 are explained later.

The assignment bit map 32 is data defining CPUs to which processes generated from each program can be assigned. In this data, an assignment of a process which each CPU can execute is indicated by bit information (0 or 1) corresponding to each program. Therefore, based on the assignment bit map 32, it is possible to recognize to which CPU the processes generated from each program can be assigned. Details of the assignment bit map 32 are explained later.

The idle-timeslot map 33 stores bit information indicating the timeslots to which processes are assigned in the timeslot-assignment map 31 or the timeslots to which processes are not yet assigned in the timeslot-assignment map 31 (i.e., idle-CPU-resource information). Therefore, based on the idle-timeslot map 33, it is possible to recognize which timeslot is idle. Details of the idle-timeslot map 33 are explained later.

The GUI 34 interprets the signals inputted from input devices such as the keyboard 21 and the mouse 22, generates various commands, and sends the generated commands to the resource management system 36. Thus, an interactive process is generated in the resource management system 36. In addition, the GUI 34 displays on the monitor 20 information sent from the resource management system 36.

Each of the programs 35 is a parallel program or nonparallel program. The parallel program is a program which can be executed by CPUs in parallel, and the nonparallel program is a program which is executed by one of the CPUs. In addition, at least a portion of each of the programs 35 is read from the HDD 14 into the RAM 19.

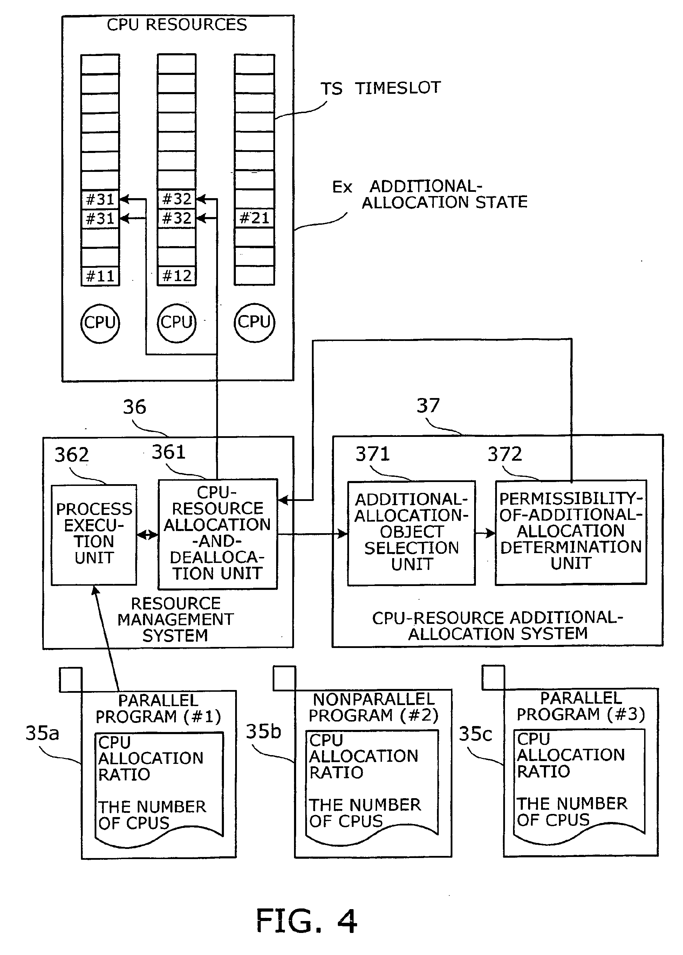

The resource management system 36 manages resources on the system such as the CPU resources, memory resources, and the like. In addition, the resource management system 36 generates one or more processes (i.e., a plurality of parallel processes or a nonparallel process) based on a command sent from the GUI 34, the programs 35, and the CPU-resource additional-allocation system 37, and executes the one or more processes in a time-sharing manner. On the other hand, when the state of the idle CPU resources varies, the resource management system 36 sends a command to the CPU-resource additional-allocation system 37. At this time, in the case of execution in a time-sharing manner, the resource management system 36 refers to information registered in the assignment bit map 32 and the CPU-resource additional-allocation system 37, and assigns processes to each CPU. Details of the above information registered in the assignment bit map 32 and the CPU-resource additional-allocation system 37 are explained later, and details of the resource management system 36 are also explained later with reference to Fig. 4.

The CPU-resource additional-allocation system 37 selects a parallel program for which idle CPU resources are to be additionally allocated, and determines whether or not the parallel program can operate in a harmonized manner by using the idle CPU resources. In addition, the CPU-resource additional-allocation system 37 registers a result of the determination in the idle-timeslot map 33, and sends a command to the resource management system 36. Details of the CPU-resource additional-allocation system 37 are explained later with reference to Fig. 4.

Fig. 4 is a diagram illustrating details of constructions of the resource management system and the additional allocation system. The operations of the resource management system 36 and the CPU-resource additional-allocation system 37 in Fig. 3 are realized by at least one of the CPUs 11 to 13. After messages are exchanged between the resource management system 36 and the CPU-resource additional-allocation system 37, the resource management system 36 and the CPU-resource additional-allocation system 37 operate independently of each other.

The resource management system 36 comprises a CPU-resource allocation-and-deallocation unit 361 and a process execution unit 362, where the CPU-resource allocation-and-deallocation unit 361 assigns processes to CPU resources, and the process execution unit 362 executes the assigned processes. The resources on the system managed by the resource management system 36 include CPU resources and memory resources. Since the present invention is mainly related to utilization of the CPU resources, the CPU resources are explained below. The CPU resources are data processing functions realized by the CPUs 11 to 13, and are managed on a timeslot-by-timeslot basis. The timeslot (TS) is a unit of allocation of the CPU resources. That is, CPU usage times can be allocated to the processes in timeslots. Hereinafter, a percentage of timeslots allocated to a processor (except for the additionally allocated timeslots) in each period is referred to as a CPU allocation ratio.

The CPU-resource allocation-and-deallocation unit 361 allocates CPU resources to processes for executing a program, according to a CPU allocation ratio and a degree of parallelism required by the program, and deallocates CPU resources allocated to completed processes, where the degree of parallelism corresponds to the number of CPUs. At this time, the state of the idle CPU resources is changed. In addition, the CPU-resource allocation-and-deallocation unit 361 performs processing for priority control (which is different from the processing performed by the additional-allocation-object selection unit 371). For example, in the processing for priority control, the execution priority is raised so that processes are executed by CPU resources to which the processes are assigned, or lowered so that a process other than a process which is assigned to a CPU resource is not executed by the CPU resource. The execution priority is set for each process, and indicates a rank of priority based on which a CPU determines one of a plurality of processes to be executed. Processes of programs which are executed through the resource management system are assigned to timeslots of the CPUs, and processes which are not executed through the resource management system are not assigned to timeslots of the CPUs. The processes which are not executed through the resource management system are determined to be or not to be executed based on the execution priority. Specifically, each CPU executes a process having the highest execution priority.

By changing the execution priority of each process, it is possible to switch between a setting for giving a high priority to the throughput increase and a setting for giving a high priority to the guarantee of turnaround times. Hereinbelow, criteria for changing the execution priority are explained. In the following explanations, priority control of idle CPU resources is illustrated.

(1) In the processing where a high priority is given to the throughput increase, processes which are not generated through the resource management system are executed by idle CPU resources in preference to processes which are generated through the resource management system. When there is no process which is not generated through the resource management system, processes which are generated through the resource management system are executed by the idle CPU resources.

(2) In the processing where a high priority is given to the guarantee of turnaround times, only at least one program which is additionally assigned is executed by using idle CPU resources.

Thus, the possibility of occurrence of a synchronization wait in processing executed by using the idle CPU resources decreases.

Further, the CPU-resource allocation-and-deallocation unit 361 controls switching of processes executed by the process execution unit 362. In the process switching, processing performed by the process execution unit 362 is interrupted and a context is switched in response to determination of a process to be executed in the coming timeslot. That is, a context of the process which has been executed by the process execution unit 362 is saved, and a context corresponding to the process to be executed is passed to the process execution unit 362. The contexts are information which is necessary for execution of the respective processes, and include, for example, a value in a program counter at the time of the interruption of the process and the like.

When the timeslot-assignment map 31 indicates that no process is assigned to the coming timeslot, the CPU-resource allocation-and-deallocation unit 361 assigns at least one process to CPU resources in accordance with CPU allocation ratios. When the timeslot-assignment map 31 is updated according to submission or completion of a parallel program, the CPU-resource allocation-and-deallocation unit 361 notifies the CPU-resource additional-allocation system 37 of the change of the state, and prompts the CPU-resource additional-allocation system 37 to perform additional allocation of idle CPU resources. On the other hand, when the CPU-resource allocation-and-deallocation unit 361 is notified by the CPU-resource additional-allocation system 37 of completion of additional allocation, the CPU-resource allocation-and-deallocation unit 361 refers to registered information, which is information on additional allocation such as the idle-timeslot map 33, and explained in detail later. In addition, the CPU-resource allocation-and-deallocation unit 361 determines processes to be executed in idle timeslots based on the registered information (i.e., assigns the processes to the idle timeslots).

The process execution unit 362 generates processes (parallel processes and/or a nonparallel process) based on a plurality of parallel programs 35a to 35c and a command sent from the GUI 34, and executes the generated processes in a time-sharing manner. At this time, the process execution unit 362 executes processes assigned to CPU resources.

Next, the CPU-resource additional-allocation system 37 is explained. The CPU-resource additional-allocation system 37 comprises an additional-allocation-object selection unit 371 and a permissibility-of-additional-allocation determination unit 372, where the additional-allocation-object selection unit 371 selects parallel processes to which idle CPU resources are to be additionally allocated, and the permissibility-of-additional-allocation determination unit 372 determines whether or not the parallel processes can operate in a harmonized manner by using the idle CPU resources. The CPU-resource additional-allocation system 37 operates when parallel processes are submitted or ended.

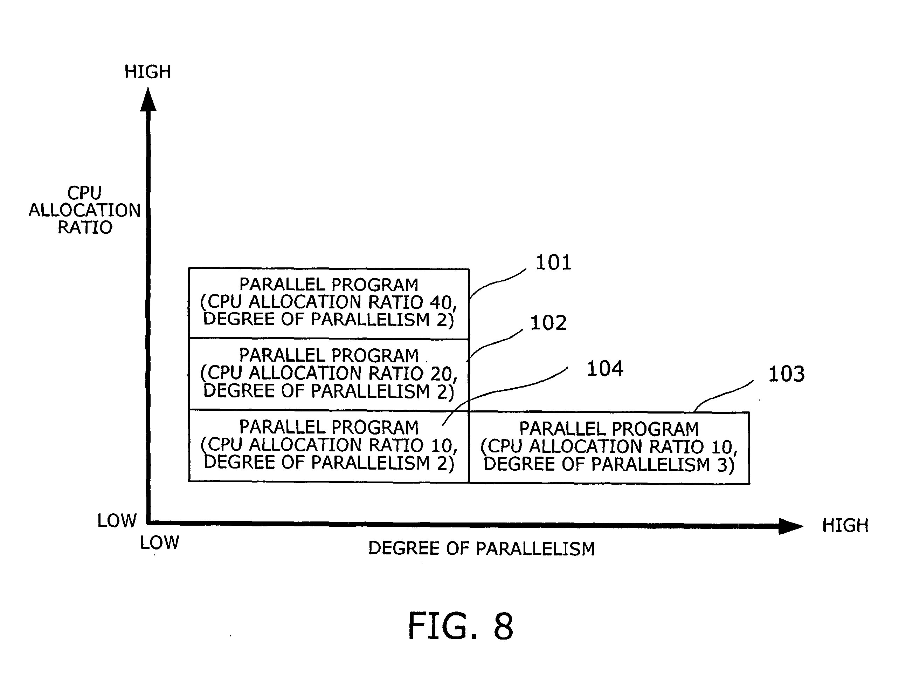

The additional-allocation-object selection unit 371 selects a parallel program for which idle CPU resources are to be additionally allocated. Specifically, the additional-allocation-object selection unit 371 sorts and manages the assignment bit map 32 for each parallel program according to a CPU allocation ratio and a degree of parallelism which are required by the parallel program, as explained later with reference to Fig. 8. The degree of parallelism is the number of CPUs which execute, in parallel, parallel processes generated from a parallel program. The additional-allocation-object selection unit 371 selects parallel processes in decreasing order of the CPU allocation ratio. When more than one parallel program requires an identical CPU allocation ratio, the additional-allocation-object selection unit 371 selects parallel processes in decreasing order of the degree of parallelism.

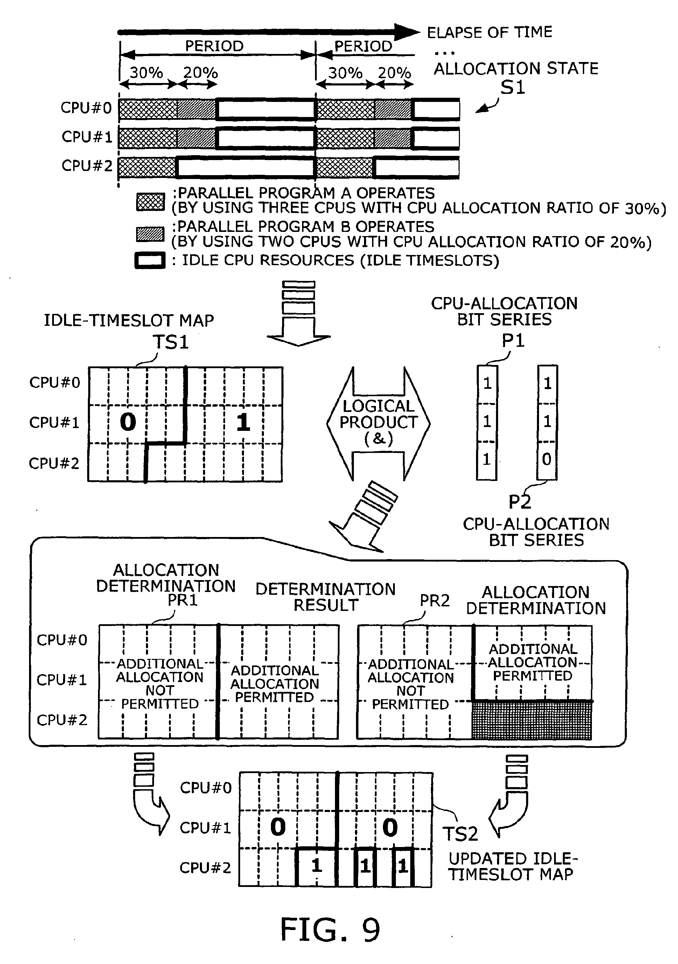

The permissibility-of-additional-allocation determination unit 372 determines whether or not the parallel program selected by the additional-allocation-object selection unit 371 can operate in a harmonized manner by using idle CPU resources. Only when yes is determined, additional allocation of CPU resources is permitted, i.e., information indicating the permission is registered in the idle-timeslot map 33. When the registration is completed, the permissibility-of-additional-allocation determination unit 372 notifies the CPU-resource allocation-and-deallocation unit 361 of the completion of the registration. At this time, in addition to the registration in the idle-timeslot map 33, the permissibility-of-additional-allocation determination unit 372 may generate a temporary additional assignment map having the same structure as the timeslot-assignment map 31 (i.e., the structure which enables allocation processing by the resource management system 36). Further, when the permissibility-of-additional-allocation determination unit 372 notifies the CPU-resource allocation-and-deallocation unit 361 of the completion of the registration, the permissibility-of-additional-allocation determination unit 372 also sends information necessary for the allocation processing, such as CPU numbers and timeslots which are registered. Then, the resource management system 36 performs the additional allocation based on such information. The additional allocation can be performed by reference to the timeslot-assignment map 31, the assignment bit map 32, and the idle-timeslot map 33, or to the temporary additional assignment map or the information necessary for the allocation processing which is sent from the permissibility-of-additional-allocation determination unit 372 to the CPU-resource allocation-and-deallocation unit 361. Hereinafter, the information necessary for the allocation processing is simply referred to as registered information. Details of the permissibility-of-additional-allocation determination unit 372 are explained later with reference to Fig. 9.

When parallel programs 35a, 35c, and nonparallel program 35b are submitted to the above construction, the process execution unit 362 generates parallel processes #11, #12, #31, and #32, and nonparallel process #21. In addition, when the state of idle CPU resources varies, the CPU-resource allocation-and-deallocation unit 361 sends a message to the CPU-resource additional-allocation system 37. Then, the permissibility-of-additional-allocation determination unit 372 in the CPU-resource additional-allocation system 37 registers additional allocation of idle CPU resources in the idle-timeslot map 33, and notifies the CPU-resource allocation-and-deallocation unit 361 of completion of the registration of the allocation. When the CPU-resource allocation-and-deallocation unit 361 is notified of the completion of the registration of the allocation, the CPU-resource allocation-and-deallocation unit 361 performs additional allocation in accordance with the registered information in the idle-timeslot map 33 (which is sent with the notification) as indicated in Fig. 4 as "Additional-allocation State Ex." The additional-allocation state Ex is a state of additional allocation in accordance with the registered information sent with the notification. Then, the process execution unit 362 makes the corresponding CPUs execute the processes in accordance with the above additional allocation. In the additional-allocation state Ex, the parallel processes #11 and #12 of the parallel program (#1) 35a are entered in ones of the timeslots TS by normal allocation, and the nonparallel process #21 of the nonparallel program (#2) 35b and the parallel processes #31 and #32 of the parallel program (#3) 35c are entered in several other ones of the timeslots TS by additional allocation.

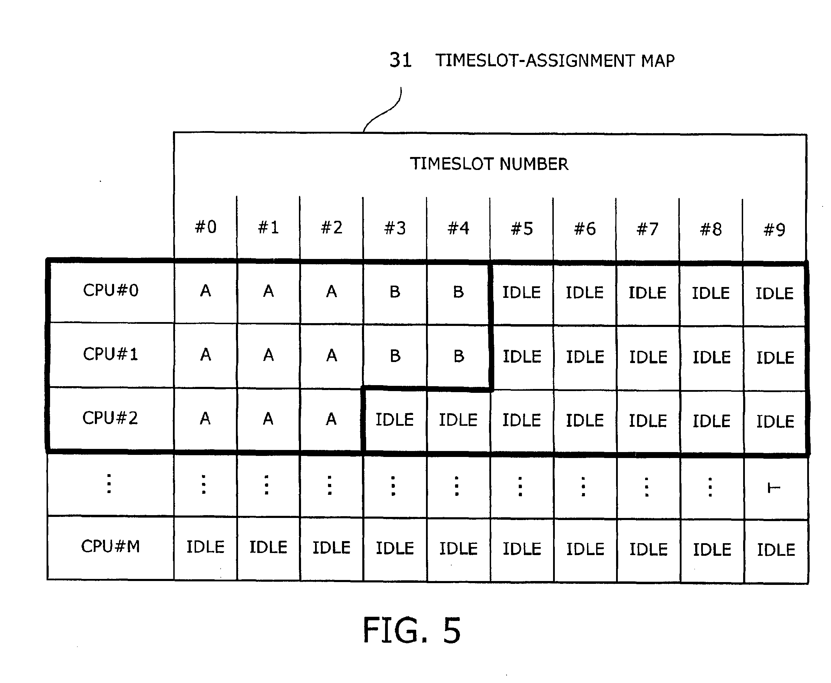

Fig. 5 is a diagram illustrating an example of a timeslot-assignment map. In the example of Fig. 5, each period is divided into ten timeslots, and the timeslot numbers #0 to #9 are assigned to the respective timeslots. In the timeslot-assignment map 31, a process which is to be executed in each of the timeslots #0 to #9 by each of a plurality of CPUs #0 to #M is set. For convenience of explanation, hereinbelow, it is assumed that only three CPUs #0 to #2 exist in the system. Therefore, the three CPUs #0 to #2 may be referred to as all CPUs.

In the example of Fig. 5, parallel processes generated from a parallel program A are set in the timeslots #0 to #2 of all of the CPUs #0 to #2, and parallel processes generated from a parallel program B are set in the timeslots #3 and #4 of the CPUs #0 and #1. No process is set in the timeslots #3 and #4 of the CPU #2 and the timeslots #5 to #9 of the CPUs #0 to #2. That is, the timeslots #3 and #4 of the CPU #2 and the timeslots #5 to #9 of the CPUs #0 to #2 are idle timeslots.

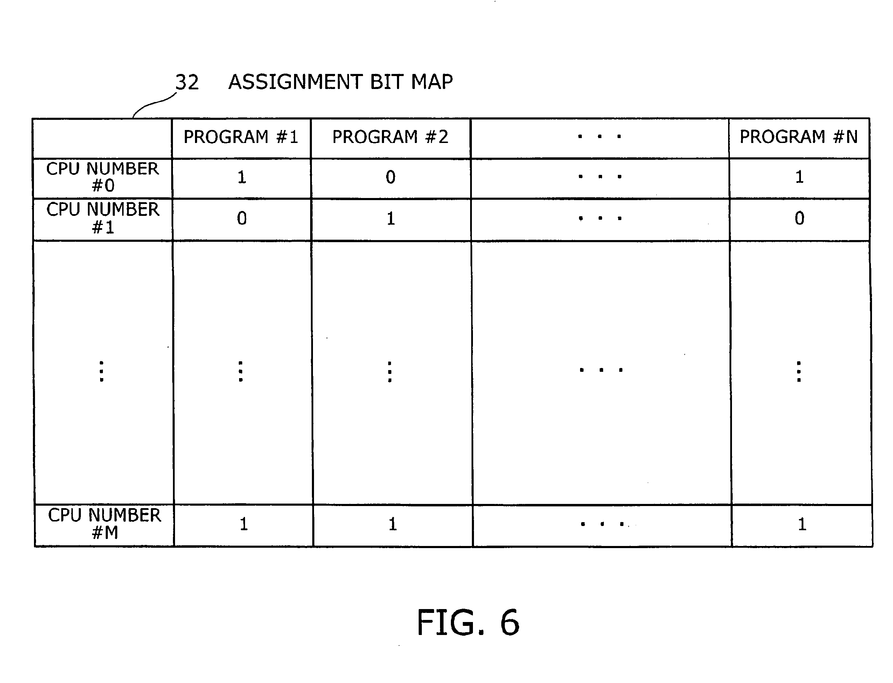

Fig. 6 is a diagram illustrating an example of an assignment bit map. In the example of Fig. 6, parallel processes are assigned to the respective CPUs. In the assignment bit map 32 of Fig. 6, a value indicating whether or not there is a process to be executed by each of the CPUs #0 to #M in each of the parallel programs #1 to #N is set. The value is set as bit information indicating 0 or 1, and a series of bits indicating allocations of the CPUs #0 to #M in each column can be simultaneously used in calculation. The series of bits may have a data form having a unit length of a byte, word, or double word. Thus, it is possible to choose a form of the series of bits which is most suitable for performance capabilities of the used CPUs, and the number of logical calculations can be optimized. In addition, in the above bit information, "0" indicates that no process is assigned to the CPU yet, and "1" indicates that a process is already assigned to the CPU.

Fig. 7 is a diagram illustrating an example of an idle-timeslot map. In the example of Fig. 7, each period is divided into ten timeslots, and the timeslot numbers #0 to #9 are assigned to the respective timeslots. In addition, in the idle-timeslot map 33, a value indicating whether or not there is a process to be executed by each of the CPUs #0 to #M in each of the timeslots #0 to #9 is set. The value is set as bit information indicating 0 or 1, and a series of bits indicating allocations of the CPUs #0 to #M and corresponding to each timeslot can be simultaneously used in calculation. The series of bits may have a data form having a unit length of a byte, word, or double word. Thus, it is possible to choose a form of the series of bits which is most suitable for performance capabilities of the used CPUs, and optimize the number of logical calculations. In addition, in the above bit information, "0" indicates that the timeslot of the CPU is not idle (i.e., a process is assigned to the timeslot of the CPU), and "1" indicates that the timeslot of the CPU is idle (i.e., no process is assigned to the timeslot of the CPU).

Next, preferential selection in the aforementioned additional-allocation-object selection unit 371 is explained below with reference to Fig. 8.

Fig. 8 is a diagram illustrating an example of selection priority assignment for preferential selection. In the example of Fig. 8, the ordinate corresponds to the CPU allocation ratio, and the abscissa corresponds to the degree of parallelism. Fig. 8 indicates the selection priorities of the respective parallel programs 101 to 104 indicated in the assignment bit map 32. The selection priorities of parallel programs are assigned in decreasing order of the CPU allocation ratio, and the selection priorities of parallel programs having an identical CPU allocation ratio are assigned in decreasing order of the degree of parallelism.

Therefore, in the example of Fig. 8, a higher selection priority is assigned to a parallel program indicated in an upper area. In addition, a higher selection priority is assigned to the right one of the parallel programs 103 and 104 having the identical CPU allocation ratio than the left one. Thus, the highest selection priority is assigned to the parallel program 101, and the second highest selection priority is assigned to the parallel program 102. Since the parallel programs 103 and 104 have the same CPU allocation ratio, the third highest selection priority is assigned to the parallel program 103, and the lowest selection priority is assigned to the parallel program 104.

Next, a determination procedure in the aforementioned permissibility-of-additional-allocation determination unit 372 is explained in detail with reference to Fig. 9.

Fig. 9 is a diagram indicating a determination procedure in the permissibility-of-additional-allocation determination unit.

In the determination processing explained below, the permissibility-of-additional-allocation determination unit 372 determines whether or not the parallel processes can operate in a harmonized manner by using idle CPU resources, and whether or not additional allocation of idle CPU resources is permitted.

In addition, data of the assignment bit map 32 and the idle-timeslot map 33 are used in the determination processing. The permissibility-of-additional-allocation determination unit 372 determines whether or not additional allocation of idle CPU resources is permitted, based on the data by using the following formula (1) for determination.

$$
\left.
\begin{array}{l}
P_i \ \& \ E_k = P_i \ : \ \text{Additional Allocation Permitted} \\[2mm]
P_i \ \& \ E_k \neq P_i \ : \ \text{Additional Allocation Not Permitted}
\end{array}
\right\} (1)
$$

In the above formula, $P_i$ is a bit series indicating CPUs allocated to parallel processes generated from a parallel program i in the assignment bit map 32, and $E_k$ is a bit series indicating idle timeslots having a timeslot number k in the idle-timeslot map 33 (which is indicated in Fig. 9 and is hereinbelow referred to as the idle-timeslot map TS1). In the determination using the above formula (1), a bitwise logical product of the bit series $P_i$ in the assignment bit map 32 and the bit series $E_k$ in the idle-timeslot map 33 is obtained, and the determination about the permission is made based on whether or not the set of the logical products coincides with bit series $P_i$.

Details of the determination processing are explained below with reference to Fig. 9.

In Fig. 9, the allocation state S1 is a state of CPU resources allocated based on the timeslot-assignment map 31.

In the allocation state S1, resources of the CPUs #0, #1, and #2 corresponding to the CPU allocation ratio of 30% are allocated to parallel processes generated from the parallel program A, and resources of the CPUs #0 and #1 corresponding to the CPU allocation ratio of 20% are allocated to parallel processes generated from the parallel program B. In Fig. 9, the idle-timeslot map is denoted by TS1. In addition, a bit series indicating CPUs required to be allocated to parallel processes generated from the parallel program A is indicated as the CPU allocation bit series $P_1$, and a bit series indicating CPUs required to be allocated to parallel processes generated from the parallel program B is indicated as the CPU allocation bit series $P_2$. When the aforementioned formula (1) is applied to the idle-timeslot map TS1 and the CPU allocation bit series $P_1$, the result PR1 is obtained by the determination processing. In addition, when the aforementioned formula (1) is applied to the idle-timeslot map TS1 and the CPU allocation bit series $P_2$, the result PR2 is obtained by the determination processing. That is, as illustrated in Fig. 9, it is possible to recognize the timeslots which can be allocated to the parallel programs A and B. Then, the idle-timeslot map TS1 is updated to the idle-timeslot map TS2.

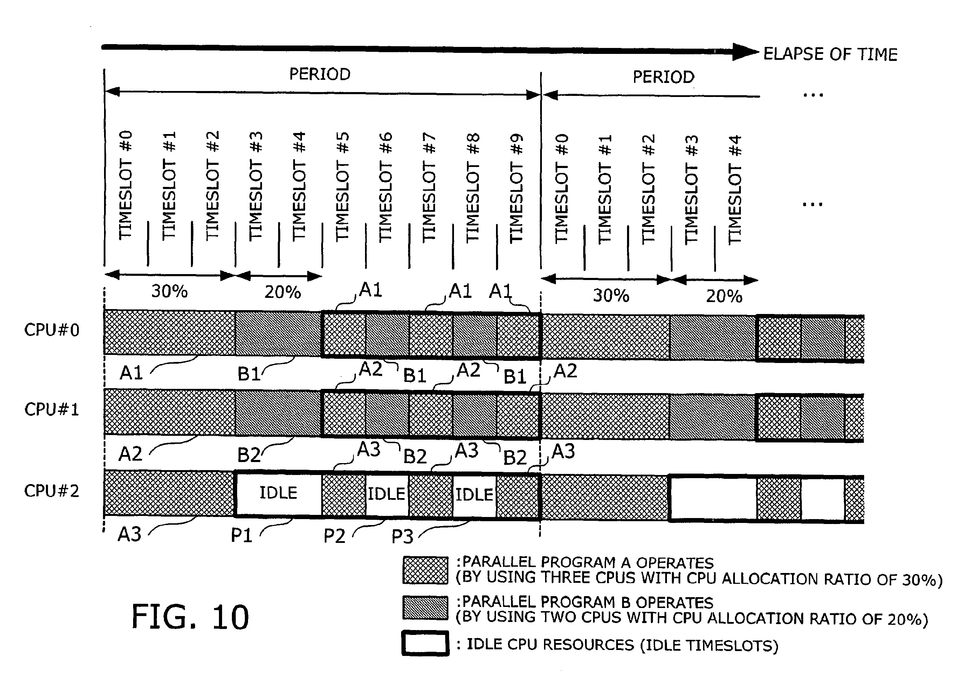

Based on the updated idle-timeslot map TS2, the CPU-resource allocation-and-deallocation unit 361 in the resource management system 36 additionally assigns the parallel processes to the CPU resources. The execution state of the parallel processes to which the CPU resources are allocated in accordance with the idle-timeslot map TS2 is explained later together with the advantages of embodiments of the invention by referring to Fig. 10.

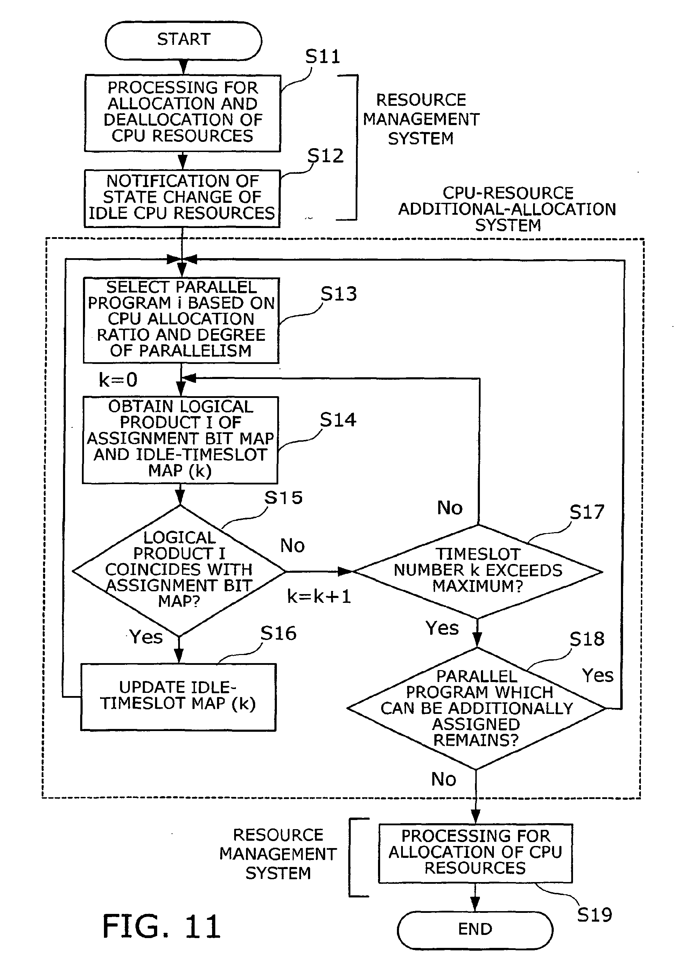

Next, operations for execution of the parallel processes in the present embodiment are explained in detail with reference to Fig. 11.

Fig. 11 is a flow diagram indicating processing for execution of parallel processes in the present embodiment. The processing of Fig. 11 is performed by one of the CPUs when parallel processes are submitted into the system or completed. The sequence of processing indicated in Fig. 11 is explained below step by step, where the names of the functions referred to in Fig. 11 are based on Figs. 3 and 4.

[Step S11] The CPU-resource allocation-and-deallocation unit 361 in the resource management system 36 allocates CPU resources to processes included in a program according to a CPU allocation ratio and the number of CPUs which are required by the program, and deallocates CPU resources allocated to completed processes. At this time, the state of the idle CPU resources is changed.

[Step S12] The CPU-resource allocation-and-deallocation unit 361 in the resource management system 36 notifies the CPU-resource additional-allocation system 37 of the change of the state of the idle CPU resources, and prompts the CPU-resource additional-allocation system 37 to perform additional allocation of idle CPU resources. Thereafter, the resource management system 36 and the CPU-resource additional-allocation system 37 operate independently of each other. The operations in the following steps S13 to S18 are performed by the CPU-resource additional-allocation system 37. In addition, the CPU-resource allocation-and-deallocation unit 361 performs processing for priority control (which is different from the processing performed by the additional-allocation-object selection unit 371). For example, in the processing for priority control, the execution priority is raised so that a parallel process which is assigned to a CPU resource in step S11 can operate by using the CPU resource, or lowered so that a parallel process other than a parallel process which is assigned to a CPU resource in step S11 can not operate by using the CPU resource.

Then, the CPU resources are controlled to be used for execution of parallel processes to which high execution priorities are assigned. That is, when the execution priorities of the parallel processes to which the CPU resources are allocated in step S11 become high, the parallel processes operate by using the CPU resources.

[Step S13] The additional-allocation-object selection unit 371 in the CPU-resource additional-allocation system 37 selects a parallel program to which idle CPU resources are to be additionally allocated. At this time, the additional-allocation-object selection unit 371 selects a parallel program i according to a CPU allocation ratio and a degree of parallelism. In addition, the target timeslot number k in the idle-timeslot map 33 is initialized (i.e., k is set to zero).

[Step S14] The additional-allocation-object selection unit 371 in the CPU-resource additional-allocation system 37 obtains a bitwise logical product I of a portion of the assignment bit map 32 corresponding to the parallel program i and a portion of the idle-timeslot map 33 corresponding to the target timeslot number k (see Fig. 9).

[Step S15] The permissibility-of-additional-allocation determination unit 372 in the CPU-resource additional-allocation system 37 determines whether or not the parallel processes generated from the parallel program selected in step S13 can operate in a harmonized manner by using idle CPU resources. Only when yes is determined, additional allocation of CPU resources is permitted. That is, the permissibility-of-additional-allocation determination unit 372 in the CPU-resource additional-allocation system 37 determines whether or not the bitwise logical product I coincides with the portion of the assignment bit map 32 corresponding to the parallel program i.

When the bitwise logical product I coincides with the portion of the assignment bit map 32 corresponding to the parallel program i, the operation goes to step S16. When the bitwise logical product I does not coincide with the portion of the assignment bit map 32 corresponding to the parallel program i, the operation goes to step S17. When the operation goes to step S17, the target timeslot number k is incremented by one (i.e., k is incremented to k+1) so that the object to be processed moves to the next timeslot in the idle-timeslot map 33.

[Step S16] Since it is determined in step S15 that the bitwise logical product I coincides with the portion of the assignment bit map 32 corresponding to the parallel program i, the permissibility-of-additional-allocation determination unit 372 in the CPU-resource additional-allocation system 37 updates the portion of the idle-timeslot map 33 corresponding to the target timeslot number k. The updated idle-timeslot map 33 (indicating idle CPU resources) is referred to by the resource management system 36 for additional allocation of idle CPU resources.

[Step S17] The permissibility-of-additional-allocation determination unit 372 in the CPU-resource additional-allocation system 37 determines whether or not the target timeslot number k incremented in step S15 exceeds the maximum timeslot number. When yes is determined in step S17, the operation goes to step S18. When no is determined in step S17, the operation goes back to step S14.

[Step S18] The additional-allocation-object selection unit 371 in the CPU-resource additional-allocation system 37 determines whether or not another parallel program to which idle CPU resources can be additionally allocated exists in the assignment bit map 32. Thus, the operations in steps S13 to S18 are repeated until no parallel program to which idle CPU resources can be additionally allocated remains in the assignment bit map 32.

When a parallel program to which idle CPU resources can be additionally allocated remains in the assignment bit map 32, the operation goes back to step S13. When no parallel program to which idle CPU resources can be additionally allocated remains in the assignment bit map 32, the operation goes to step S19.

[Step S19] The CPU-resource allocation-and-deallocation unit 361 in the resource management system 36 allocates to parallel processes idle CPU resources which are to be allocated to the parallel processes. In addition, the CPU-resource allocation-and-deallocation unit 361 controls (raises or lowers) the execution priorities of the parallel processes so that the parallel processes operate by using the idle CPU resources. Thus, parallel processes having high execution priorities can use CPU resources.

Then, the parallel processes allocated CPU resources are executed by the process execution unit 362 in the resource management system 36. That is, the parallel processes having high execution priorities operate by using idle CPU resources.

When the operation goes to step S19, the parallel processes operate by using the idle CPU resources allocated in step S16 until parallel processes are next submitted or completed.

According to the parallel-process execution method illustrated as the embodiment of the present invention, the following advantages (1) to (3) are obtained. Details of the advantages are explained below.

(1) The turnaround time is guaranteed, and the throughput of the entire system increases.

Fig. 10 is a diagram indicating an execution state after additional allocation of CPU resources in the present embodiment. A result of scheduling after determination of additional allocation by the CPU-resource additional-allocation system according to the present invention is shown in Fig. 10.

Assume the following two parallel programs exist.

- Parallel program A having parallel processes A1 to A3 and using three CPUs with a CPU allocation ratio of 30%.
- Parallel program B having parallel processes B1 and B2 and using two CPUs with a CPU allocation ratio of 20%.

According to the scheduling based on the conventional turnaround preference policy, the aforementioned result as illustrated in Fig. 13 is obtained. In the scheduling based on the conventional turnaround preference policy, parallel processes are not executed by using idle CPU resources. Therefore, it is possible to avoid a waste of CPU time caused by a synchronization wait which occurs in the scheduling based on the throughput preference policy. (As explained later with reference to Fig. 12, according to the throughput preference policy, a process which can operate by using an idle CPU resource is executed. Fig. 12 is different from Fig. 13 in that the throughput preference policy is used instead of the turnaround preference policy.) However, according to the conventional turnaround preference policy, the operation rates of the CPU#0 and CPU#1 are 50%, and the operation rate of the CPU#2 is 30%. That is, the throughput decreases.

On the other hand, in Fig. 10, the timeslots #0 to #2 of the CPU#0 corresponding to the CPU allocation ratio of 30% are allocated to the parallel process A1, and the timeslots #3 and #4 of the CPU#0 corresponding to the CPU allocation ratio of 20% are allocated to the parallel process B1. In addition, the timeslots #0 to #2 of the CPU#1 corresponding to the CPU allocation ratio of 30% are allocated to the parallel process A2, and the timeslots #3 and #4 of the CPU#1 corresponding to the CPU allocation ratio of 20% are allocated to the parallel process B2. Further, the timeslots #0 to #2 of the CPU#2 corresponding to the CPU allocation ratio of 30% are allocated to the parallel process A3. However, the timeslots #3 and #4 of the CPU#2 are idle CPU resources (idle timeslots) P1.

Furthermore, the timeslots encircled by the bold lines in Fig. 10 can be additionally allocated to other processes. That is, the timeslots #5 of the CPU#0, CPU#1, and CPU#2 each corresponding to the CPU allocation ratio of 10% are additionally allocated to the parallel processes A1, A2, and A3, respectively, and the timeslots #6 of the CPU#0 and CPU#1 each corresponding to the CPU allocation ratio of 10% are additionally allocated to the parallel processes B1 and B2, respectively. The timeslot #6 of the CPU#2 is an idle CPU resource (idle timeslot) P2. That is, the idle CPU resource (idle timeslot) P2 cannot be allocated for a parallel program which can operate in parallel. However, when a process which can be executed in this timeslot is entered, it is possible to allocate the idle timeslot P2 to the process. The timeslots #7 to #9 can also be allocated to respectively appropriate processes in similar manners to the timeslots #5 and #6.

As explained above, in the present embodiment, idle CPU resources are additionally allocated to parallel processes which can operate in harmony with each other by using the idle CPU resources. Therefore, further parallel processes can operate by using idle CPU resources of the CPU#0, CPU#1, and CPU#2 so that the operation rates of the CPU#0 and CPU#1 are 100%, and the operation rate of the CPU#2 is 60%. That is, the throughput is doubled compared with the aforementioned turnaround preference policy.

Next, the execution state according to the conventional throughput preference policy is explained in detail with reference to Fig. 12.

Fig. 12 is a diagram indicating an execution state in accordance with the conventional throughput preference policy. Although the example illustrated in Fig. 12 is based on the turnaround preference policy mentioned in Fig. 13, a high priority is placed on the throughput.

The example illustrated in Fig. 12 includes the CPU#0, CPU#1, and CPU#2, and each period is divided into the timeslots #0 to #9. In addition, the parallel processes A1, A2, and A3 are respectively executed by the CPU#0, CPU#1, and CPU#2 in the timeslots #0 to #2, and the parallel processes B1 and B2 are respectively executed by the CPU#0 and CPU#1 in the timeslots #3 and #4.

Further, although the other timeslots are indicated as idle CPU resources in Fig. 12, the parallel processes A1 to A3, B1, and B2 are additionally assigned to the timeslots #5 to #9 of the CPU#0, the timeslots #5 to #9 of the CPU#1, and the timeslots #3 to #9 of the CPU#2.

In the above situation, an attempt is made to increase the throughput of the entire system. However, since the CPU#0 and CPU#1 are occupied by the parallel processes B1 and B2, the process A3 cannot perform synchronized communication (such as data exchange), and is required to wait for synchronization, where the synchronization wait time in the process A3 can be counted into a processing time of the process A3. Therefore, in the case where users can use the processing functions of a server computer, and charge are made based on total operation times of the CPUs, charges are made for even CPU-time increases due to synchronization-wait loops. Thus, charges for executions of an identical parallel program can vary depending on the amounts of idle timeslots.

As explained above, the throughput preference policy is beneficial to the system provider in that the efficiency (throughput) of the entire system increases. However, the turnaround time is not guaranteed, and the cost increases. Therefore, the throughput preference policy is unbeneficial to the users of the computer system.

(2) The amount of calculation processing for scheduling of parallel processes decreases.

Since the processing for determination of parallel processes which can operate in a harmonized manner can be realized by simple logic calculation, the amount of the processing for determination is very small even when the number of CPUs is increased for a large system. Thus, the scheduling performance can be increased.

Assume that an assignment bit map for parallel processes and an idle-timeslot map indicating idleness of each timeslot are represented in a 32-bit data form. In this case, the number of CPUs installed in the system is related with the number of logical calculations necessary for the processing for determination as indicated in Table 1. As understood from Table 1, the amount of calculation necessary for the processing for determination is very small even in a large-scale system including a large number of CPUs.

Table 1

Relationship between the Number of CPUs Installed in the System and the Number of Logical Calculations Necessary for the Determination Processing

| Number of CPUs | Number of Logical Calculations |
|---|---|
| 1 to 32 | 1 |
| 33 to 64 | 2 |
| 65 to 96 | 3 |

(3) A large amount of idle CPU resources is allocated to a program which is required to be preferentially executed.

Since a parallel program is selected and CPU resources are allocated to the selected parallel program according to a CPU allocation ratio, a program which is required to be preferentially executed can use a large amount of idle CPU resources.

Assume that parallel programs A and B in a system having four CPUs request the following numbers of CPUs and CPU allocation ratios:

- Parallel program A: four CPUs and CPU allocation ratio of 40%
- Parallel program B: four CPUs and CPU allocation ratio of 10%

In this case, the additional-allocation-object selection unit 371, which selects objects to which idle CPU resources are to be additionally allocated according to the CPU allocation ratios, additionally allocates idle CPU resources (corresponding to a CPU allocation ratio of 50%) to the respective parallel programs as follows:

- Parallel program A: additional allocation corresponding to the CPU allocation ratio of 40%
- Parallel program B: additional allocation corresponding to the CPU allocation ratio of 10%

As explained above, idle CPU resources are allocated according to CPU allocation ratios required by parallel programs. Therefore, the parallel programs can operate by using the idle CPU resources in desirable order of precedence.

Although, in the above example, parallel processing in a multi-CPU system is performed in a harmonized manner in accordance with a schedule of process execution timings, it is possible to make a schedule for executions of a plurality of threads harmonized with each other. That is, it is possible to allocate CPU resources to the respective threads in a timeslot assignment map and an assignment bit map.

In addition, although, in the above example, the parallel processes generated from the parallel programs are additionally assigned to idle timeslots of the CPUs, it is also possible to additionally assign a non-parallel program to at least one idle timeslot of at least one CPU in a similar manner.

Details of the above processing can be described in a program which is stored in a computer-readable recording medium. In this case, the above processing functions can be realized by a computer when the computer executes the program.

The computer-readable recording medium may be a magnetic recording device, a semiconductor memory, or the like.

In order to put the program into the market, for example, it is possible to sell a portable recording medium such as a CD-ROM (Compact Disk Read Only Memory), a flexible disk, and the like in which the program is recorded.

Further, it is possible to store the program in a storage device belonging to a computer which is connected to a network, and transfer the program to another computer connected to the network.

In order to execute the program by a computer, it is possible to store the program in a hard disk or the like belonging to the computer, and load the program in a main memory.

As explained above, according to the present invention, after at least one parallel program is assigned based on at least one arbitrary processor allocation ratio, it is determined whether or not parallel processes generated from a parallel program can be assigned to idle timeslots of processors so that the parallel processes can operate in parallel. Then, the parallel processes are assigned to idle timeslots of the processors, and the parallel processes are finally executed. Therefore, it is possible to increase the throughput of the entire system in an environment in which turnaround times of parallel programs are guaranteed.

The foregoing is considered as illustrative only of the principle of the present invention. Further, since numerous modifications and changes will readily occur to those skilled in the art, it is not desired to limit the invention to the exact construction and applications shown and described.

**Claims**

1. A parallel process execution method for executing, in cycles of a predetermined period and by a plurality of processors (1, 2, 3, 11, 12, 13, CPU#0, CPU#1, CPU#2) in parallel, parallel processes generated from at least one parallel program (A, B), comprising the steps of:

   (a) dividing each predetermined period into a predetermined number of timeslots;
   (b) assigning parallel processes (A1, A2, A3, B1, B2) generated from each parallel program (A, B) to the time slots so that the parallel processes can operate in parallel for a time period corresponding to a processor allocation ratio preset for each parallel program;
   (c) creating an idle timeslot map (33) formed from a bit series Ek indicating idle states of a kth timeslot of each processor to which none of said parallel processes is assigned in step (b);
   (d) making a determination whether or not parallel processes (PA1, PA2, PA3, P1, P2, P3) generated from a said parallel program can fit into idle timeslots by testing whether Pi & Ek = Pi holds true, wherein Pi is a bit series indicating which processor is allocated to parallel processes generated from parallel program i, and wherein "&" is a bitwise logical AND operator;
   (e) additionally assigning the parallel processes (PA1, PA2, PA3, P1, P2, P3) to the idle timeslots when Pi & Ek = Pi holds true; and
   (f) executing by the plurality of processors the parallel processes assigned to the timeslots including the idle timeslots.

2. The parallel process execution method according to claim 1, wherein there is more than one parallel program (A, B), and wherein the operation in step (d) is performed on each parallel program in decreasing order of processor allocation ratio.

3. The parallel-process execution method according to claim 1, wherein there is more than one parallel program (A, B) for which an identical processor allocation ratio is preset, and wherein the operation in step (d) is performed on each parallel program in decreasing order of a degree of parallelism.

4. The parallel-process execution method according to claim 1, wherein there is more than one parallel program (A, B), and wherein the operation in step (b) is performed on each parallel program in decreasing order of degree of parallelism.

5. The parallel-process execution method according to claim 1, wherein execution of each parallel program by more than one processor is permitted in advance, and there are time periods in which the more than one processor are idle, and wherein it is determined in step (d) that parallel processes (PA1, PA2, PA3, P1, P2, P3) can operate in parallel in the time slots in which more than one processor are idle.

6. A multiprocessor type computer comprising:

a plurality of processors (1, 2, 3, 11, 12, 13, CPU#0, CPU#1, CPU#2) for executing in parallel, parallel processes (A1, A2, A3, B1, B2) generated from at least one parallel program (A, B) in cycles of a predetermined period;

means for dividing each predetermined period into a plurality of timeslots;

processor-assignment means which assigns parallel processes (A1, A2, A3, B1, B2) generated from each parallel program (A, B) to the time slots so that the parallel processes can operate in parallel for a time period corresponding to a processor allocation ratio preset for each parallel program;

mapping means for creating an idle timeslot map (33) from a bit series Ek indicating idle states of a k-th timeslot of each processor to which none of said parallel processes has been assigned by said processor-assignment means;

processor-additional-assignment means which makes at determination whether or not parallel processes (PA1, PA2, PA3, P1, P2, P3) generated from a said parallel program can fit into idle time slots by testing whether Pi & Ek = Pi holds true, where Pi is a bit series indicating which processor is allocated to parallel processes generated from parallel program i, and where "&" is a bitwise logical-AND operator; and additionally assigns the parallel processes to the idle time slots when Pi & Ek = Pi holds true; and

process-execution means which executes by the plurality of processors the parallel processes assigned to the timeslots including the idle time slots.

7. A parallel process execution program product for executing, in cycles of a predetermined period and by a plurality of processors (1, 2, 3, 11, 12, 13, CPU#0, CPU#1, CPU#2) in parallel, parallel processes generated from at least one parallel program (A, B), the parallel process execution program making a computer execute processing comprising the steps of:

(a) dividing each predetermined period into a predetermined number of timeslots;

(b) assigning parallel processes (A1, A2, A3, B1, B2) generated from each parallel program (A, B) to the time slots so that the parallel processes can operate in parallel for a time period corresponding to a processor allocation ratio preset for each parallel program;

(c) creating an idle timeslot map (33) formed from a bit series Ek indicating idle states of a kth timeslot of each processor to which none of said parallel processes is assigned in said step (b);

(d) making a determination whether or not parallel processes (PA1, PA2, PA3, P1, P2, P3) generated from each parallel program can fit into idle timeslots by testing whether Pi & Ek = Pi holds true, wherein Pi is a bit series indicating which processor is allocated to parallel processors generated from parallel program i, and wherein "&" is a bitwise logical AND operator;

(e) additionally assigning the parallel processes (PA1, PA2, PA3, P1, P2, P3) to the idle timeslots when Pi & Ek = Pi holds true; and

(f) executing by the plurality of processors the parallel processes assigned to the timeslots including the idle timeslots.

8. A computer-readable recording medium which stores the program of claim 7.

## Patentansprüche

1. Parallelprozess-Ausführungsverfahren, um in Zyklen einer vorbestimmten Periode und durch mehrere Prozessoren (1, 2, 3, 11, 12, 13, CPU#0, CPU#1, CPU#2) aus mindestens einem Parallelprogramm (A, B) erzeugte parallele Prozesse parallel auszuführen, mit den Schritten:

(a) Teilen jeder vorbestimmten Periode in eine vorbestimmte Anzahl Zeitschlitze;

(b) Zuweisen paralleler Prozesse (A1, A2, A3, B1, B2), die von jedem Parallelprogramm (A, B) erzeugt werden, zu den Zeitschlitzen, so dass die parallelen Prozesse für eine Zeitperiode parallel arbeiten können, die einem für jedes Parallelprogramm voreingestellten Prozessor-Zuordnungsverhältnis entspricht;

(c) Erzeugen einer aus einer Bitreihe Ek gebildeten Leerlauf-Zeitschlitz-abbildung (33), die Leerlaufzustände eines k-ten Zeitschlitzes jedes Prozessors angibt, dem keiner der parallelen Prozesse in Schritt (b) zugewiesen wird;

(d) Treffen einer Entscheidung, ob parallele Prozesse (PA1, PA2, PA3, P1, P2, P3), die von einem besagten Parallelprogramm erzeugt werden, in Leerlauf-Zeitschlitze passen können oder nicht, Indem getestet wird, ob Pi & Ek = Pi gilt, wobei Pi eine Bitreihe ist, die angibt, welcher Prozessor von einem Parallelprogramm i erzeugten parallelen Prozessen zugeordnet ist, und wobei "&" ein bitweiser logischer UND-Operator ist;

(e) zusätzliches Zuweisen der parallelen Prozesse (PA1, PA2, PA3, P1, P2, P3) zu den Leerlauf-Zeitschlitzen, wenn Pi & Ek = Pi gilt; und

(f) Ausführen, durch die mehreren Prozessoren, der parallelen Prozesse, die den Zeitschlitzen einschließlich der Leerlauf-Zeitschlitze zugewiesen wurden.

2. Parallelprozess-Ausführungsverfahren nach Anspruch 1, wobei es mehr als ein Parallelprogramm (A, B) gibt und wobei die Operation in Schritt (d) an jedem Parallelprogramm in abnehmender Ordnung eines Prozessor-Zuordnungsverhältnisses durchgeführt wird.

3. Parallelprozess-Ausführungsverfahren nach Anspruch 1, wobei es mehr als ein Parallelprogramm (A, B) gibt, für das ein identisches Prozessor-Zuordnungsverhältnis voreingestellt ist, und wobei die Operation in Schritt (d) an jedem Parallelprogramm In abnehmender Ordnung eines Parallelltätsgrads durchgeführt wird.

4. Parallelprozess-Ausführungsverfahren nach Anspruch 1, wobei es mehr als ein Parallelprogramm (A, B) gibt und wobei die Operation in Schritt (b) an jedem Parallelprogramm in abnehmender Ordnung eines Parallelitätsgrads durchgeführt wird.

5. Parallelprozess-Ausführungsverfahren nach Anspruch 1, wobei eine Ausführung jedes Parallelprogramms durch mehr als einen Prozessor vorher gestattet wird und es Zeitperioden gibt, in denen die mehr als ein Prozessor im Leerlauf sind und In Schritt (d) bestimmt wird, dass parallele Prozesse (PA1, PA2, PA3, P1, P2, P3) in den Zeitschlltzen, In denen mehr als ein Prozessor im Leerlauf ist, parallel arbeiten können.

6. Computer vom Multiprozessortyp, mit:

mehreren Prozessoren (1, 2, 3, 11, 12, 13, CPU#0, CPU#1, CPU#2), um parallele Prozesse (A1, A2, A3, B1, B2), die aus mindestens einem Parallelprogramm (A, B) erzeugt wurden, in Zyklen einer vorbestimmten Periode parallel auszuführen;

Mittel, um jede vorbestimmte Periode in mehrere Zeitschlitze zu teilen;

Prozessor-Zuweisungsmittel, welches parallele Prozesse (A1, A2, A3, B1, B2), die von jedem Parallelprogramm (A, B) erzeugt werden, den Zeitschlitzen zuweist, so dass die parallelen Prozesse für eine Zeitperiode entsprechend einem für jedes Parallelprogramm voreingestellten Prozessor-Zuordnungsverhältnis parallel arbeiten können;

Abbildungsmittel, um eine Leerlauf-Zeitschlitz-Abbildung (33) aus einer Bitreihe Ek zu erzeugen, die Leerlaufzustände eines k-ten Zeitschlitzes jedes Prozessors angibt, dem durch das Prozessor-Zuweisungsmittel keiner der parallelen Prozesse zugewiesen wurde;

Mittel für Prozessor-Zusatzzuweisungen, das eine Entscheidung trifft, ob parallele Prozesse (PA1, PA2, PA3, P1, P2, P3), die von einem besagten Parallelprogramm erzeugt werden, in Leerlauf-Zeitschlitze passen können oder nicht, indem getestet wird, ob Pi & Ek = Pi gilt, wobei Pi eine Bitreihe ist, die angibt, welcher Prozessor vom Parallelprogramm i erzeugten Prozessen zugeordnet ist, und "&" ein bitweiser logischer UND-Operator ist; und die parallelen Prozesse den Leerlauf-Zeitschlitzen zusätzlich zuweist, wenn Pi & Ek = Pi gilt; und

Prozess-Ausführungsmittel, welches durch die mehreren parallelen Prozessoren die parallelen Prozesse ausführt, die den Zeitschlitzen einschließlich der Leerlauf-Zeitschlitze zugewiesen wurden.

7. Programmprodukt zum Ausführen paralleler Prozesse, um in Zyklen einer vorbestimmten Periode und durch mehrere Prozessoren (1, 2, 3, 11, 12, 13, CPU#0, CPU#1, CPU#2) aus mindestens einem Parallelprogramm (A, B) erzeugte parallele Prozesse parallel auszuführen, welches Programm zum Ausführen paralleler Prozesse einen Computer eine Verarbeitung ausführen lässt, mit den Schritten:

(a) Teilen jeder vorbestimmten Periode in eine vorbestimmte Anzahl Zeitschlitze;

(b) Zuweisen paralleler Prozesse (A1, A2, A3, B1, B2), die von jedem Parallelprogramm (A, B) erzeugt werden, zu den Zeitschlitzen, so dass die parallelen Prozesse für eine Zeitperiode parallel arbeiten können, die einem für jedes Parallelprogramm voreingestellten Prozessor-Zuordnungsverhältnis entspricht;

(c) Erzeugen einer aus einer Bitreihe Ek gebildeten Leerlauf-Zeltschlitz-Abbildung (33), die Leerlaufzustände eines k-ten Zeitschlitzes jedes Prozessors angibt, dem in Schritt (b) keiner der parallelen Prozesse zugewiesen wird;

(d) Treffen einer Entscheidung, ob parallele Prozesse (PA1, PA2, PA3, P1, P2, P3), die von jedem Parallelprogramm erzeugt werden, in Leerlauf-Zeitschlitze passen können oder nicht, indem getestet wird, ob Pi & Ek = Pi gilt, wobei Pi eine Bitreihe ist, die angibt, welcher Prozessor von einem Parallelprogramm i erzeugten parallelen Prozessen zugeordnet ist, und wobei "&" ein bitweiser logischer UND-Operator ist;

(e) zusätzliches Zuweisen der parallelen Prozesse (PA1, PA2, PA3, P1, P2, P3) zu den Leerlauf-Zeitschlitzen, wenn Pi & Ek = Pi gilt; und

(f) Ausführen, durch die mehreren Prozessoren, der parallelen Prozesse, die den Zeitschlitzen einschließlich der Leerlauf-Zeitschlitze zugewiesen wurden.

**8.** Computerlesbares Aufzeichnungsmedium, welches das Programm von Anspruch 7 speichert.

**Revendications**

**1.** Procédé d'exécution de processus parallèles pour exécuter, selon des cycles d'une période prédéterminée et au moyen d'une pluralité de processeurs (1, 2, 3, 11, 12, 13, CPU#0, CPU#1, CPU#2) en parallèle, des processus parallèles qui sont générés à partir d'au moins un programme parallèle (A, B), comprenant les étapes de :

(a) division de chaque période prédéterminée selon un nombre prédéterminé de fenêtres temporelles ;

(b) assignation de processus parallèles (A1, A2, A3, B1, B2) qui sont générés à partir de chaque programme parallèle (A, B) aux fenêtres temporelles de telle sorte que les processus parallèles puissent opérer en parallèle pendant une période temporelle qui correspond à un taux d'allocation de processeurs pré-établi pour chaque programme parallèle ;

(c) création d'une carte de fenêtres temporelles de repos (33) formée à partir d'une série binaire Ek représentant des états de repos d'une k-ième fenêtre temporelle de chaque processeur à laquelle aucun desdits processus parallèles n'est assigné au niveau de l'étape (b) ;

(d) réalisation d'une détermination de si oui ou non des processus parallèles (PA1, PA2, PA3, P1, P2, P3) qui sont générés à partir d'un dit programme parallèle peuvent s'ajuster à l'intérieur de fenêtres temporelles de repos en testant si oui ou non Pi & Ek = Pi reste vrai, où Pi est une série binaire indiquant quel processeur est alloué à des processus parallèles qui sont générés à partir d'un programme parallèle i, et dans lequel "&" est un opérateur ET logique concernant des bits ;

(e) assignation de façon, additionnelle des processus parallèles (PA1; PA2, PA3, P1, P2, P3) aux fenêtres temporelles de repos lorsque Pi & Ek = Pi reste vrai ; et

(f) exécution par la pluralité de processeurs des processus parallèles assignés aux fenêtres temporelles en incluant les fenêtres temporelles de repos.

**2.** Procédé d'exécution de processus parallèles selon la revendication 1, dans lequel il y a plus d'un programme parallèle (A, B) et dans lequel l'opération de l'étape (d) est réalisée sur chaque programme parallèle selon un ordre décroissant du taux d'allocation de processeur.

**3.** Procédé d'exécution de processus parallèles selon la revendication 1, dans lequel il y a plus d'un programme parallèle (A, B) pour lequel un taux d'allocation de processeur identique est préétabli et dans lequel l'opération au niveau de l'étape (d) est réalisée sur chaque programme parallèle selon un ordre décroissant d'un degré de parallélisme.

**4.** Procédé d'exécution de processus parallèles selon la revendication 1, dans lequel il y a plus d'un programme parallèle (A, B) et dans lequel l'opération au niveau de l'étape (B) est réalisée sur chaque programme parallèle selon un ordre décroissant de degré de parallélisme.

**5.** Procédé d'exécution de processus parallèles selon la revendication 1, dans lequel l'exécution de chaque programme parallèle par plus d'un processeur est autorisée à l'avance et il y a des périodes temporelles au niveau desquelles les plus d'un processeur sont au repos et dans lequel il est déterminé au niveau de l'étape (d) que des processus parallèles (PA1, PA2, PA3, P1, P2, P3) peuvent fonctionner en parallèle dans les fenêtres temporelles dans lesquelles plus d'un processeur sont au repos.

**6.** Ordinateur du type multiprocesseur comprenant :

une pluralité de processeurs (1, 2, 3, 11, 12, 13, CPU#0, CPU#1, CPU#2) pour exécuter en parallèle des processus parallèles (A1, A2, A3, B1, B2) qui sont générés à partir d'au moins un programme parallèle (A, B) selon des cycles d'une période prédéterminée ;

un moyen pour diviser chaque période prédéterminée selon une pluralité de fenêtres temporelles ;

un moyen d'assignation de processeur qui assigne des processus parallèles (A1, A2, A3, B1, B2) qui sont générés à partir de chaque programme parallèle (A, B) aux fenêtres temporelles de telle sorte que les processus parallèles puissent fonctionner en parallèle pendant une période temporelle qui correspond à un taux d'allocation de processeur pré-établi pour chaque programme parallèle ;

un moyen de cartographie pour créer une carte de fenêtres temporelles de repos (33) à partir d'une série binaire Ek représentant des états de repos d'une k-ième fenêtre temporelle de chaque processeur à laquelle aucun desdits processus parallèles n'a été assigné par ledit moyen d'assignation de processeur ;

un moyen d'assignation additionnelle de processeur qui réalise une détermination de si oui ou non des processus parallèles (PA1, PA2, PA3, P1, P2, P3) qui sont générés à partir d'un dit programme parallèle peuvent s'ajuster à l'intérieur de fenêtres temporelles de repos en testant si oui ou non Pi & Ek = Pi reste vrai, où Pi est une série binaire indiquant quel processeur est alloué à des processus parallèles qui sont générés à partir d'un programme parallèle i et où "&" est un opérateur ET logique concernant des bits ; et qui assigne de façon additionnelle les processus parallèles aux fenêtres temporelles de repos lorsque Pi & Ek = Pi reste vrai ; et

un moyen d'exécution de processus qui exécute au moyen de la pluralité de processeurs les processus parallèles assignés aux fenêtres temporelles en incluant les fenêtres temporelles de repos.

7. Produit de programme d'exécution de processus parallèles pour exécuter, selon des cycles d'une période prédéterminée et au moyen d'une pluralité de processeurs (1, 2, 3, 11, 12, 13, CPU#0, CPU#1, CPU#2) en parallèle, des processus parallèles qui sont générés à partir d'au moins un programme parallèle (A, B), le programme d'exécution de processus parallèles ayant pour effet qu'un ordinateur exécute un traitement comprenant les étapes de :

(a) division de chaque période prédéterminée selon un nombre prédéterminé de fenêtres temporelles ;

(b) assignation de processus parallèles (A1, A2, A3, B1, B2) qui sont générés à partir de chaque programme parallèle (A, B) aux fenêtres temporelles de telle sorte que les processus parallèles puissent fonctionner en parallèle pendant une période temporelle qui correspond à un taux d'allocation de processeur préétabli pour chaque programme parallèle ;

(c) création d'une carte de fenêtres temporelles de repos (33) qui est formée à partir d'une série binaire Ek représentant des états de repos d'une k-ième fenêtre temporelle de chaque processeur à laquelle aucun desdits processus parallèles n'est assigné au niveau de ladite étape (b) ;

(d) réalisation d'une détermination de si oui ou non des processus parallèles (PA1, PA2, PA3, P1, P2, P3) qui sont générés à partir de chaque programme parallèle peuvent s'ajuster à l'intérieur de fenêtres temporelles de repos en testant si oui ou non Pi & Ek = Pi reste vrai, où Pi est une série binaire représentant quel processeur est alloué à des processus parallèles générés à partir d'un programme parallèle i et dans lequel "&" est un opérateur ET logique concernant des bits ;

(e) assignation de façon additionnelle des processus parallèles (PA1, PA2, PA3, P1, P2, P3) aux fenêtres temporelles de repos lorsque Pi & Ek = Pi reste vrai ; et

(f) exécution par la pluralité de processeurs des processus parallèles assignés aux fenêtres temporelles en incluant les fenêtres temporelles de repos.

8. Support d'enregistrement lisible par ordinateur qui stocke le programme de la revendication 7.

FIG. 1

10　COMPUTER

MONITOR
20

11　CPU

12　CPU

13　CPU

15　GRAPHIC PROCESSING DEVICE

19　RAM (MEMORY)

14　HDD

16　INPUT INTERFACE

21

KEYBOARD

22　MOUSE

17　COMMUNI-CATION INTERFACE

18

23

NETWORK

FIG. 2

KEYBOARD
MOUSE

30

OS    35    34

| 31 | TIMESLOT-ASSIGNMENT MAP |
| 35 | PROGRAMS (PARALLEL PROGRAMS OR NONPARALLEL PROGRAMS) |
| 34 | GUI |

32 ASSIGNMENT BIT MAP

11 (CPU#0)

36 RESOURCE MANAGEMENT SYSTEM

(CPU#1)    (CPU#2)

37 CPU-RESOURCE ADDITIONAL-ALLOCATION SYSTEM

12

13

33 IDLE-TIMESLOT MAP

# FIG. 3

20

CPU RESOURCES

TS TIMESLOT

Ex ADDITIONAL-
ALLOCATION STATE

#31 ← #32 ←
#31 ← #32 ← #21
#11 #12

CPU CPU CPU

36

362 361

PROCESS
EXECU-
TION
UNIT

CPU-
RESOURCE
ALLOCATION
-AND-
DEALLOCA-
TION UNIT

RESOURCE
MANAGEMENT
SYSTEM

37

371 372

ADDITIONAL-
ALLOCATION-
OBJECT
SELECTION
UNIT

PERMISSIBILITY-
OF-ADDITIONAL-
ALLOCATION
DETERMINATION
UNIT

CPU-RESOURCE ADDITIONAL-
ALLOCATION SYSTEM

PARALLEL
PROGRAM (#1)

35a

CPU
ALLOCATION
RATIO

THE NUMBER
OF CPUS

NONPARALLEL
PROGRAM (#2)

35b

CPU
ALLOCATION
RATIO

THE NUMBER
OF CPUS

PARALLEL
PROGRAM (#3)

35c

CPU
ALLOCATION
RATIO

THE NUMBER
OF CPUS

FIG. 4

**31 TIMESLOT-ASSIGNMENT MAP**

| | | TIMESLOT NUMBER | | | | | | | | | |
| --- | --- | --- | --- | --- | --- | --- | --- | --- | --- | --- |
| | #0 | #1 | #2 | #3 | #4 | #5 | #6 | #7 | #8 | #9 |
| CPU#0 | A | A | A | B | B | IDLE | IDLE | IDLE | IDLE | IDLE |
| CPU#1 | A | A | A | B | B | IDLE | IDLE | IDLE | IDLE | IDLE |
| CPU#2 | A | A | A | IDLE | IDLE | IDLE | IDLE | IDLE | IDLE | IDLE |
| ⋮ | ⋮ | ⋮ | ⋮ | ⋮ | ⋮ | ⋮ | ⋮ | ⋮ | ⋮ | ⊢ |
| CPU#M | IDLE | IDLE | IDLE | IDLE | IDLE | IDLE | IDLE | IDLE | IDLE | IDLE |

## FIG. 5

EP 1 341 083 B1

32 ASSIGNMENT BIT MAP

| | PROGRAM #1 | PROGRAM #2 | · · · | PROGRAM #N |
|---|---|---|---|---|
| CPU NUMBER #0 | 1 | 0 | · · · | 1 |
| CPU NUMBER #1 | 0 | 1 | · · · | 0 |
| ⋮ | ⋮ | ⋮ | · · · | ⋮ |
| CPU NUMBER #M | 1 | 1 | · · · | 1 |

FIG. 6

EP 1 341 083 B1

33  IDLE-TIMESLOT MAP

| | TIMESLOT NUMBER #0 | TIMESLOT NUMBER #1 | . . . . | TIMESLOT NUMBER #9 |
|---|---|---|---|---|
| CPU NUMBER #0 | 0 | 1 | . . . | 1 |
| CPU NUMBER #1 | 1 | 0 | . . . | 0 |
| ⋮ | ⋮ | ⋮ | . . . | ⋮ |
| CPU NUMBER #M | 1 | 0 | . . . . | 1 |

FIG. 7

EP 1 341 083 B1

FIG. 8

FIG. 9

FIG. 10

START

PROCESSING FOR
ALLOCATION AND
DEALLOCATION OF
CPU RESOURCES — S11

RESOURCE
MANAGEMENT
SYSTEM

NOTIFICATION OF
STATE CHANGE OF
IDLE CPU RESOURCES — S12

CPU-RESOURCE
ADDITIONAL-ALLOCATION
SYSTEM

SELECT PARALLEL
PROGRAM i BASED ON
CPU ALLOCATION
RATIO AND DEGREE
OF PARALLELISM — S13

k=0

OBTAIN LOGICAL
PRODUCT I OF
ASSIGNMENT BIT MAP
AND IDLE-TIMESLOT
MAP (k) — S14

LOGICAL
PRODUCT I
COINCIDES WITH
ASSIGNMENT BIT
MAP? — S15

No

k=k+1

TIMESLOT
NUMBER k EXCEEDS
MAXIMUM? — S17

No

Yes

Yes

UPDATE IDLE-
TIMESLOT MAP (k) — S16

PARALLEL
PROGRAM WHICH
CAN BE ADDITIONALLY
ASSIGNED
REMAINS? — S18

Yes

No

RESOURCE
MANAGEMENT
SYSTEM

PROCESSING FOR
ALLOCATION OF CPU
RESOURCES

END — S19

# FIG. 11

FIG. 12
*PRIOR ART*

ELAPSE OF TIME

PERIOD

PERIOD

...

TIMESLOT #0
TIMESLOT #1
TIMESLOT #2
TIMESLOT #3
TIMESLOT #4
TIMESLOT #5
TIMESLOT #6
TIMESLOT #7
TIMESLOT #8
TIMESLOT #9
TIMESLOT #0
TIMESLOT #1
TIMESLOT #2
TIMESLOT #3
TIMESLOT #4

...

30%    20%    A1    A1    A1    30%    20%

CPU#0

A1    B1    A2    A2    B1    A2    B1

CPU#1

A2    B2    B2    B2

CPU#2

A3

SYNCHRO-
NIZATION
WAIT

:PARALLEL PROGRAM A OPERATES
(BY USING THREE CPUS WITH CPU ALLOCATION RATIO OF 30%)

:PARALLEL PROGRAM B OPERATES
(BY USING TWO CPUS WITH CPU ALLOCATION RATIO OF 20%)

: IDLE CPU RESOURCES (IDLE TIMESLOTS)

EP 1 341 083 B1

FIG. 13
*PRIOR ART*

ELAPSE OF TIME

PERIOD | PERIOD

TIMESLOT #0 | TIMESLOT #1 | TIMESLOT #2 | TIMESLOT #3 | TIMESLOT #4 | TIMESLOT #5 | TIMESLOT #6 | TIMESLOT #7 | TIMESLOT #8 | TIMESLOT #9 | TIMESLOT #0 | TIMESLOT #1 | TIMESLOT #2 | TIMESLOT #3 | TIMESLOT #4

30% | 20% | 30% | 20%

CPU#0 — A1 — B1 — P1 — IDLE STATE — IDLE STATE

CPU#1 — A2 — B2 — P2 — IDLE STATE — IDLE STATE

CPU#2 — A3 — P3 — IDLE STATE — IDLE STATE

:PARALLEL PROGRAM A OPERATES
(BY USING THREE CPUS WITH CPU ALLOCATION RATIO OF 30%)

:PARALLEL PROGRAM B OPERATES
(BY USING TWO CPUS WITH CPU ALLOCATION RATIO OF 20%)

: IDLE CPU RESOURCES (IDLE TIMESLOTS)

EP 1 341 083 B1